# EUROPEAN PATENT APPLICATION

(11) **EP 4 834 598 A1**
(43) Date of publication of application: **04.11.2026**
(21) Application number: 25172869.7
(22) Date of filing: 28.04.2025
(51) Int. Cl.: B60C 1/00, C08L 9/06

(54) **A TYRE RUBBER COMPONENT, A PNEUMATIC TYRE, AND METHODS FOR MAKING THE SAME**

(71) Applicant: Nokian Renkaat Oyj, 37101 Nokia (FI)
(72) Inventor: Kemppainen, Noora, 37101 Nokia (FI); Shakun, Alexandra, 37101 Nokia (FI); Moisio, Harri, 37101 Nokia (FI)
(74) Representative: Berggren Oy

(57) **Abstract**

The invention relates to a tyre rubber component that contains a renewable constituent. The tyre rubber component contains an amount of at least 2 phr of cross-linked elastomeric polyester material of suberin monomers and pentacyclic triterpenoid(s). A pneumatic tyre containing the tyre rubber component is also provided, as well as methods for producing the tyre rubber component and for manufacturing the pneumatic tyre, respectively.

## Description

### Technical field

The present disclosure relates to tyre rubber components that comprise one or more renewable constituents and methos for producing the same. The present disclosure further relates to pneumatic tyres comprising such tyre rubber component and methods for manufacturing such tyres.

### Background

A pneumatic tyre comprises a variety of components, of which a significant proportion are rubber components, which are needed to meet performance requirements. A tyre rubber component is typically an entity based on a composition of rubbers, fillers, additives such as softeners and antidegradants, and curing agents, which together give the component its unique properties, once cured. A passenger car tyre may contain from 20 to 30 wt.% of natural rubber and roughly a corresponding amount of synthetic rubber, which is typically produced of petroleum based materials. The primary source of natural rubber is the sap of the rubber tree (*Hevea brasiliensis*) that is grown in tropical regions. Despite being a natural polymer, production of natural rubber is not fully sustainable, which is why alternative sources of biobased polymers need to be explored.

Renewable raw materials, which are being introduced into the rubber compositions in increasing amounts to substitute their fossil based counterparts, however, often have different characteristics due to the biological origin. For example, the blending capability of constituents of biological origin may differ considerably from those conventionally used in tyre rubber components. In tyre rubber components, also the constituent's ability to provide desired functionality is required, without deteriorating quality or overall performance of the tyre rubber or tyre.

Thus a need exists to provide new renewable raw materials that contain enhanced functionality and meet both sustainability and performance requirements of the tyre industry. In particular, there is a need for sustainable and renewable elastomers or rubbers that can be used industrially for the production of tyre rubber components for pneumatic tyres and pneumatic tyres comprising the same.

### Summary

The present disclosure addresses the problems disclosed above. It is an object of the present disclosure to provide a method for producing a more environmentally sustainable tyre rubber component that contains enhanced functionality and products thereof.

Birch bark contains compounds, such as suberin and pentacyclic triterpenoids, particularly betulin, which may be used to produce a renewable elastomeric polyester material, that contains a network structure of esterified fatty acids. A cross-linked elastomeric polyester material produced of birch bark has been found to present properties typical for rubber and suitable for use in a tyre rubber component. In particular, said cross-linked elastomeric polyester material may be used for replacing conventional rubbers that are typically used in a tyre rubber component, especially styrene butadiene rubber, natural rubber, isoprene rubber, epoxidized natural rubber, and/or butadiene rubber.

An advantage of the cross-linked elastomeric polyester material is that it may be produced to contain functionalities within its structure, such as carbon chain moieties between adjacent ester bonds having one or more of carbon-carbon double bond(s), epoxy group(s), and/or hydroxyl group(s), which enable the material to participate in subsequent curing reactions. Further, the cross-linked elastomeric polyester material may be produced to contain functionalities within its structure, in particular oxygen containing groups such as hydroxyl groups, which contribute to polarity of the material, which can improve its compatibility with other renewable materials that are often polar. The cross-linked elastomeric polyester material may thus be used for increasing the amount of constituents of biological origin in a tyre rubber component, to produce a tyre rubber component which is more environmentally sustainable.

According to a first example aspect, herein is provided a tyre rubber component that comprises a renewable constituent, wherein the tyre rubber component comprises an amount of at least 2 phr of cross-linked elastomeric polyester material of suberin monomers and pentacyclic triterpenoid(s), the amount of the cross-linked elastomeric polyester material included in the hundred rubber.

According to a second example aspect, herein is provided a method for producing a tyre rubber component that comprises a renewable constituent, the method comprising:
- mixing step-wise together a composition comprising rubber, one or more filler, one or more additive, and one or more curing agent, and
- shaping the composition into a tyre rubber component suitable for curing,
wherein the rubber comprises an amount of at least 2 phr of cross-linked elastomeric polyester material of suberin monomers and pentacyclic triterpenoid(s), the amount of the cross-linked elastomeric polyester material included in the hundred rubber.

In certain embodiments, the tyre rubber component or the rubber comprises the cross-linked elastomeric polyester material in an amount in the range of 2 to 70 phr, preferably 5 to 50 phr, further preferably 5 to 30 phr, more preferably 5 to 15 phr.

In certain embodiments, the tyre rubber component or the rubber comprises one or more of styrene butadiene rubber, natural rubber, isoprene rubber, epoxidized natural rubber, and/or butadiene rubber, in amount(s) yielding a total rubber amount of up to 100 phr.

In certain embodiments, the tyre rubber component or the rubber comprises styrene butadiene rubber, such as solution polymerized styrene butadiene rubber, preferably in an amount of at least 5 phr, further preferably in the range of 10 to 98 phr, yet further preferably 15 to 95 phr, more preferably 20 to 80 phr, even more preferably 30 to 70 phr.

In certain embodiments, the tyre rubber component comprises epoxidized natural rubber, preferably in an amount of at least 5 phr, more preferably in the range of 10 to 30 phr, even more preferably 15 to 25 phr.

In certain embodiments, the tyre rubber component or the rubber comprises
- styrene butadiene rubber, preferably in an amount of at least 5 phr, further preferably 15 to 95 phr, more preferably 20 to 80 phr, even more preferably 30 to 70 phr, and
- epoxidized natural rubber preferably in an amount of at least 5 phr, more preferably in the range of 10 to 30 phr, even more preferably 15 to 25 phr, the total rubber amount yielding up to 100 phr.

According to a further example aspect, herein is provided a pneumatic tyre for a vehicle, the tyre comprising:
a metal component,
a textile component, and
a tyre rubber component according to the first example aspect or obtainable by a method according to the second example aspect,
the components bonded together by means of curing.

According to yet a further example aspect, herein is provided a method for manufacturing a pneumatic tyre for a vehicle, the method comprising
providing a tyre rubber component according to the first example aspect or obtainable by a method according to the second example aspect,
arranging the tyre rubber component onto a building drum to form a tubular preform,
expanding the tubular preform to form a preform of a pneumatic tyre,
arranging a metal component and a textile component onto the preform of a tyre, thereby manufacturing a preform of a pneumatic tyre comprising the tyre rubber component, and
curing the preform of a pneumatic tyre, thereby bonding the components together by means of curing and thereby manufacturing the pneumatic tyre for a vehicle.

According to yet a further example aspect, herein is provided use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a tyre rubber component.

According to yet a further example aspect, herein is provided use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a pneumatic tyre for a vehicle.

Various parts of the description as disclosed herein, including the summary provided above and the detailed description provided hereafter, are meant to be read together and may be combined.

### Brief description of the drawings

The symbols Sx, Sz and Sy, when present in the Figures, refer to coordinate directions orthogonal to each other.
- Fig. 1a: shows a schematic drawing of a pneumatic tyre;
- Fig. 1b: shows a quarter of a cross-section of a pneumatic tyre;
- Fig. 2: illustrates schematically a method for producing a tyre rubber component;
- Fig. 3: illustrates schematically a method for manufacturing a pneumatic tyre;
- Fig. 4: illustrates schematically a part of a cross-linked elastomeric polyester material of suberin monomers and pentacyclic triterpenoid(s), and suberin monomers;
- Fig. 5: shows a Py-GC/MS gas chromatogram of betulin when pyrolysed at 340 °C;
- Fig. 5a: shows mass spectra at retention time RT3 of the chromatogram of Fig. 5;
- Fig. 5b: shows mass spectra at retention time RT2 of the chromatogram of Fig. 5;
- Fig. 5c: shows mass spectra at retention time RT1 of the chromatogram of Fig. 5;
- Fig. 6: shows a Py-GC/MS gas chromatogram of cross-linked elastomeric polyester material of suberin monomers and pentacyclic triterpenoid(s) when pyrolysed at 340 °C, the sample preparation including acetone extraction;
- Fig. 6a: shows mass spectra at retention time RT3 of the chromatogram of Fig. 6;
- Fig. 6b: shows mass spectra at retention time RT2 of the chromatogram of Fig. 6;
- Fig. 6c: shows mass spectra at retention time RT1 of the chromatogram of Fig. 6;
- Fig. 7: shows Py-GC/MS gas chromatograms of a cured tyre component comprising cross-linked elastomeric polyester material of suberin monomers and pentacyclic triterpenoid(s), TRB1, and of a cured tyre rubber component without cross-linked elastomeric polyester material of suberin monomers and pentacyclic triterpenoid(s), TRB2, respectively, when pyrolysed at 340 °C, the sample preparation including acetone extraction;
- Fig. 7a: shows mass spectra at retention time RT1 of the chromatogram of Fig. 7 measured from the cured tyre rubber component without cross-linked elastomeric polyester material of suberin monomers and pentacyclic triterpenoid(s), TRB2;
- Fig. 7b: shows mass spectra at retention time RT1 of the chromatogram of Fig. 7 measured from the cured tyre component comprising cross-linked elastomeric polyester material of suberin monomers and pentacyclic triterpenoid(s), TRB1;
- Fig. 8: shows Py-GC/MS gas chromatograms of a cured tyre component comprising cross-linked elastomeric polyester material of suberin monomers and pentacyclic triterpenoid(s), TRB1, when pyrolysed at 340 °C, the sample preparation including acetone extraction;
- Fig. 8a: shows mass spectra at retention time RT2 of the chromatogram of Fig. 8;
- Fig. 8b: shows mass spectra at retention time RT1 of the chromatogram of Fig. 8;
- Fig. 9: shows Py-GC/MS gas chromatograms of a cured tyre component comprising cross-linked elastomeric polyester material of suberin monomers and pentacyclic triterpenoid(s), TRB1, and of a cured tyre rubber component comprising betulin, TRB3, respectively, when pyrolysed at 340 °C, the sample preparation including acetone extraction.

The schematic figures are for illustrative purposes, and not meant to limit the invention, which is disclosed in the appended set of claims.

### Detailed description

Within this disclosure, the term tyre refers to a pneumatic tyre for a vehicle, especially motor vehicle, unless otherwise indicated. Advantageously, the term tyre refers to one or more of:
- a class P, i.e. Passanger, tyre as defined by the Tire and Rim Association, abbreviated as TRA,
- a class LT, i.e. Light Truck, tyre as defined by the TRA,
- a passenger car tyre as defined by the European Tyre and Rim Technical Organisation, abbreviated as ETRTO, and/or
- a C-type, i.e. Commercial, tyre as defined by the ETRTO.

These classifications denote the intended vehicle types and usage conditions of the tyre, according to the respective standards of the TRA or the ETRTO.

As used herein, tyre refers to a cured, i.e. vulcanized, tyre, whereas green tyre denotes an assembled, but not yet cured tyre.

In the context of the present disclosure, tyre rubber component refers to an uncured, i.e. non-vulcanized, component. After curing, reference is made to a cured or vulcanized tyre rubber component. It is however understood that any tyre rubber component comprised in a tyre that is cured, i.e. vulcanized, is consequently a cured or vulcanized tyre rubber component. The skilled person understands that in the context of pneumatic tyres, benefits and/or effects of a tyre rubber component are reported for a cured, i.e. vulcanized, tyre rubber component, that is as the tyre rubber component is or will be in a (ready-made) tyre. In the context of this disclosure, tyre rubber component refers to a shaped component suitable for curing, which has been prepared by mixing step-wise together constituents, typically rubber(s), filler(s), additive(s), and curing agent(s). Advantageously, a tyre rubber component is or is intended to be part of a cured pneumatic tyre for a vehicle, especially as detailed above. That is, a tyre rubber component is advantageously suitable for a pneumatic tyre for a vehicle, especially for tyres as detailed above. As used herein, the term tyre rubber component includes rubber parts or coatings of metal and/or textile components usable in tyres, especially pneumatic tyres for a vehicle, advantageously in tyres as detailed above. In the context of the present disclosure, rubber component refers to tyre rubber component unless otherwise specified.

In the context of this disclosure, following abbreviations denote respective rubbers:
- SBR refers to styrene butadiene rubber, and can be emulsion polymerized styrene butadiene rubber, referred to as ESBR, or solution polymerized styrene butadiene rubber, referred to as SSBR, or both,
- BR refers to butadiene rubber, and can be BR of various cis and/or trans content, and/or BR with vinyl content,
- NR refers to natural rubber, and can be natural rubber from Hevea, Guayule, and/or Dandelion,
- IR refers to isoprene rubber, which is a synthetic equivalent to natural rubber,
- ENR refers to epoxidized natural rubber.

As used herein, rubber generally refers to elastomers usable in tyre rubber components, especially for a pneumatic tyre for a vehicle, advantageously a tyre as detailed in the foregoing.

The expression parts per hundred rubber, abbreviated as phr, is commonly used in rubber manufacturing to denote the mass proportion of a component in a composition containing elastomer(s), i.e. rubber(s), wherein the total mass of rubber is given a nominal value of 100. In the context of the present disclosure, cross-linked elastomeric polyester material of suberin monomers and pentacyclic triterpenoid(s) is included in the total mass of rubber given the nominal value of 100. In other words, in this disclosure, cross-linked elastomeric polyester material of suberin monomers and pentacyclic triterpenoid(s) is included in the hundred rubber, and thus considered as a rubber. The cross-linked elastomeric polyester material of suberin monomers and pentacyclic triterpenoid(s) may be used to replace other rubber(s) or elastomer(s) in tyre rubber components or tyres.

As used herein, curing refers to cross-linking reactions between polymer chains, especially cross-linking reactions forming covalent linkages or bonds between polymer chains. In the context of this disclosure, said covalent linkages are typically carbon-carbon, carbon-sulphur, and/or sulphur-sulphur. In particular, curing refers in the context of the present disclosure to heat and pressure induced curing carried out with the aid of curing agent(s) sometimes also referred to as curing chemical(s) or curative(s). Such curing may be referred to as vulcanization. Advantageously, the curing or vulcanization, as used herein, is sulphur vulcanization, peroxide vulcanization, i.e. peroxide curing, metal ion vulcanization, i.e. metal ion curing, or vulcanization with resin, i.e. curing with resin, more advantageously sulphur vulcanization, or peroxide vulcanization, i.e. peroxide curing, even more advantageously sulphur vulcanization.

In the context of the present disclosure, cross-linking refers to covalent cross-linking that takes place during production of an elastomer or rubber, typically in a step in which monomers are polymerized to form the elastomer or rubber. In the case of cross-linked elastomeric polyester material of suberin monomers and pentacyclic triterpenoid(s), for example, cross-linking refers to covalent cross-links formed when subjecting suberin monomers and pentacyclic triterpenoid(s) to polymerization, typically covalent cross-links formed between (suberin) monomers during production of the cross-linked elastomeric polyester material of suberin monomers and pentacyclic triterpenoid(s). In the context of this disclosure, such cross-links are typically covalent ester bonds typically linking together two suberin monomer moieties.

In the context of this disclosure, bark refers to outermost layers of stems and roots of woody plants, in particular to outermost layers of at least stems of trees. As used herein, bark refers to tissues outside the vascular cambium and may include inner and/or outer layers, advantageously at least an outer layer. Such outer layer may be periderm or part(s) thereof. In the present disclosure, birch refers to trees of the genus *Betula.* Advantageously, birch refers to *Betula pendula,* sometimes referred to as silver birch, *Betula papyrifera,* sometimes referred to as white birch, and/or *Betula alleghaniensis,* sometimes referred to as yellow birch, more advantageously *Betula pendula.* As used herein, birch bark refers to bark of birch tree(s), i.e. tree(s) of the genus *Betula,* advantageously *Betula pendula, Betula papyrifera,* and/or *Betula alleghaniensis,* more advantageously *Betula pendula.* In the context of the present disclosure, birch bark refers at least to outer bark, i.e. periderm or parts thereof of birch tree(s), advantageously *Betula pendula.*

As used herein, the term bark includes industrial bark. Industrial bark typically contains wood in a minor but non-negligible amount, for example wood in an amount in the range of 17 to 32 wt-%, based on the total weight of the industrial bark. Industrial birch bark may contain wood, and/or bark from tree(s) other than birches, in a minor but non-negligible amount, for example in an amount in the range of 17 to 32 wt-%, based on the total weight of the industrial birch bark. Industrial birch bark is obtainable for example as an industrial side stream from the pulp and paper industry. It has been found that the present cross-linked elastomeric polyester material can be generated from industrial bark containing suberin and pentacyclic triterpenoid(s) even on industrial scale using the herein described method.

As used herein, dry weight refers to a weight from which the weight of water has been excluded, if water is present. In other words, water, if present, is not taken into account in a dry weight, or weight percentages calculated based on dry weight.

The share of renewable or biogenic carbon in a carbon containing material or product, e.g. polymer, can be determined by carbon isotope analysis, for example according to ASTM D6866-24a Thus, presence of a renewable constituent or renewable constituents can be analytically determined and quantified for example from a tyre rubber component or a tyre.

### Pneumatic tyre and tyre rubber component comprising cross-linked elastomeric polyester material of suberin monomers and pentacyclic triterpenoid(s)

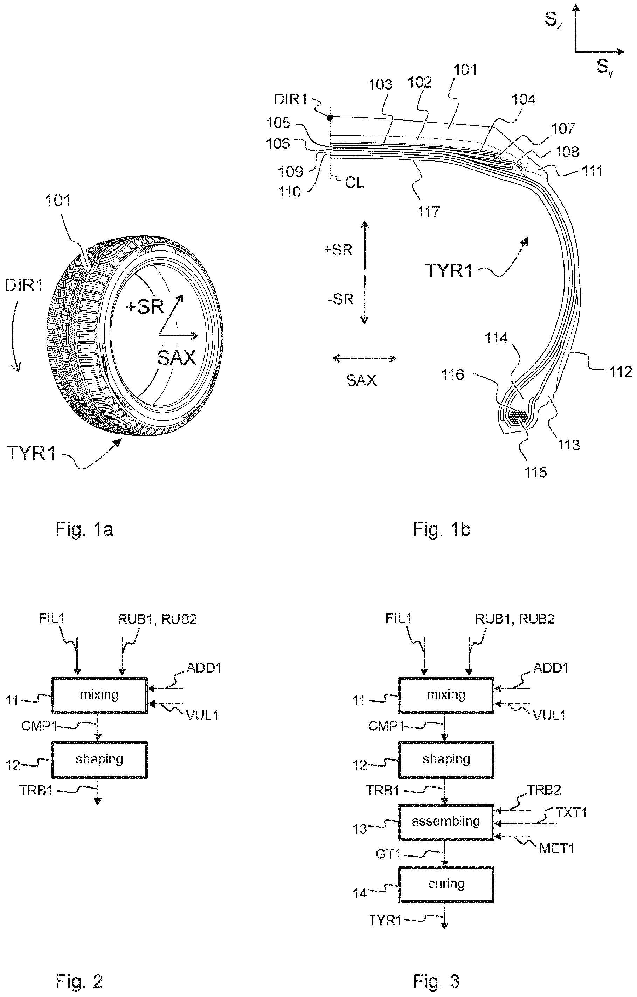

Reference is made to Figure 1a, which shows a schematic drawing of a pneumatic tyre TYR1. The tyre has an imaginary center point, from which an axial direction SAX and a radial direction SR may be defined. The axial direction SAX and the radial direction SR are directions which are perpendicular to each other. The direction of rotation DIR1 indicates movement which occurs when the tyre TYR1 is rotating and is perpendicular to the axial direction SAX and to the radial direction SR. The radial direction may be expressed with a positive sign +SR, to signify a direction extending towards the outer perimeter of the tyre TYR1, or with a negative sign -SR, to signify an opposite direction, which extends towards the imaginary center point. The tread 101 is the outmost tyre rubber component and layer of the tyre TYR1 in the radial direction +SR, on the outer perimeter of the tyre TYR1. The tyre TYR1 may be a tyre without studs, or a studded tyre.

Reference is made to Figure 1b, which shows a cross-sectional view of a quarter of a pneumatic tyre TYR1 from bead area up to a circumferential centerline CL. The circumferential centerline CL divides the tyre TYR1 into two halves of equal width. The radial direction SR is a direction parallel to the centerline CL.

A pneumatic tyre TYR1 is typically manufactured as a radial tyre of multiple components. The tyre is constructed of a variety of materials, such as metal, textile and tyre rubber components, which have been bonded together by curing. A pneumatic tyre has one or more plies 109, 110 that are reinforcing textile components with rubber coatings, and are wrapped around the bead core 115, pass radially across the tyre and wrap around the bead core on the opposite side (not shown). The ply or plies provide strength for the tyre to withstand internal air pressure, once inflated, as well as sidewall impact resistance. A pneumatic tyre may have a one layered monoply structure, or it may contain for example two plies. The one or more plies 109, 110 are typically textile components manufactured from durable synthetic material, which provides sufficient strength and stability to the tyre carcass. The textile component may be manufactured for example from polyamide, such as nylon or rayon, polyester, or aramid fiber. The bead core 115 is typically made of metal wires, such as coated metal wires. The wires may be coated with alloys of bronze and/or brass. In addition or in the alternative, the wires may be coated with wire rubber 116. The bead core serve to anchor the inflated tire to the wheel rim. An innerliner 117 may be provided on the inner surface of the tyre. An innerliner is a tyre rubber component formulated to prevent pressurized air permeation radially outwards in the direction +SR through the layers of the tyre.

A pneumatic tyre may contain one or more belts 104, 105, 106 which are positioned on top of the one or more plies 109, 110 radially outward in direction +SR around the tire. The belts are typically metal belts, such as steel belts 105, 106, which are applied between the tread area and the one or more plies 109, 110. Breaker strips 107, 108 typically made of rubber may be placed on or around edges of the steel belts 105, 106. Breaker strips protect the steel belts from friction and contribute to keeping the steel belts in place during use of the tyre. A jointless belt 104 may in addition be wound several, nonoverlapping rounds around the metal belts 105, 106, below the tread area. The jointless belt 104 may be a textile component made of non-metal material, such as polyamide, e.g. nylon or rayon, polyester, or aramid fiber. The belts 104, 105, 106 are meant to restrict the expansion of the one or more plies, stabilize the tread area, and provide impact resistance. By varying the belt width and belt angle, the performance characteristics of the pneumatic tyre, such as vehicle stability and handling characteristics, may be adjusted.

The tread area comprises multiple tyre rubber components, which comprise at least a tread 101 and a tread base 102. The tread area may further comprise an undertread 103 between the tread base 102 and the belts 104, 105, 106. A tread 101 is an exterior layer of the pneumatic tyre TYR1, which is meant to be in contact with the driving surface, when the pneumatic tyre is mounted on a vehicle wheel. The tread area may further comprise an intermediate layer (not shown) between the tread 101 and the tread base 102 or undertread 103.

A pnenumatic tyre may contain a wing, such as tread wing 111, on each side of the tread 101 in the axial direction SAX. The wing is a tread area component and serves as a transition component between the tread 101 and the sidewall 112 on each side of the tyre in the axial direction SAX. One or more further tyre rubber strips (not shown) may be present at the area joining the tread area with the sidewall, for example between the tread and the tread base.

The sidewall 112 is a tyre rubber component extending between the tread area and the bead area in the radial direction SR of the tyre, and serve for example to protect the one or more plies 109, 110. The bead area contains the parts of the tyre that secures the tyre on the wheel rim once mounted. The bead area comprises tyre rubber components, typically at least a clinch 113 and an apex 114. The apex 114 may be formed from one or more tyre rubber components. The apex typically encases the bead core 115 and attaches the bead core to the tyre. The clinch 113 is a tyre rubber component that is typically in contact with the wheel rim once the tyre is mounted, providing durability and protection e.g. to the bead core. The bead area may contain further components, such as a chafer and/or a flipper and/or other insert and/or filler components (not shown). The chafer and flipper are typically rubber coated textile components which may be manufactured for example from polyamide, such as nylon or rayon, polyester, or aramid fiber. The chafer is generally positioned within the bead area and serve as protection for the bead core. The flipper typically envelops the apex and the bead core and contributes to holding the bead core in place. Other insert and/or filler components, if present, may be tyre rubber components and/or textile components with rubber coatings.

Suberin and pentacyclic triterpenoids are compounds present in certain tree bark, such as birch bark. Suberin can be separated from the bark together with an amount of pentacyclic triterpenoids, and the suberin can be depolymerized in the presence of the pentacyclic triterpenoid(s). Suberin and pentacyclic triterpenoid(s) can then be recovered and polymerized to form a cross-linked elastomeric polyester material of suberin monomers and pentacyclic triterpenoid(s). Said material has rubber like properties and may be cured, i.e. vulcanized. For example birch bark is available as a side stream of sawmill industry. Hence, the cross-linked elastomeric polyester material of suberin monomers and pentacyclic triterpenoid(s) is a renewable material, and even obtainable from a sawmill industry side stream. Said material is hence very beneficial from the view point of environmental sustainability.

It has been found that the cross-linked elastomeric polyester material of suberin monomers and pentacyclic triterpenoid(s) can be included in tyre rubber components, especially for pneumatic tyres of vehicles, to replace conventional, such as fossil based, rubber(s). Surprisingly, it has been found that this can be done without compromising quality or performance of the tyre rubber component or a tyre containing the same. Experimental studies show that certain properties, such as tensile properties and tear strength, may even be improved. Inclusion of the cross-linked elastomeric polyester material of suberin monomers and pentacyclic triterpenoid(s) in a tyre rubber component may increase hardness.

Thus, herein is provided a pneumatic tyre for a vehicle, the tyre comprising: a metal component, a textile component, and a tyre rubber component, the components bonded together by means of curing, wherein the tyre rubber component comprises an amount of at least 2 phr of cross-linked elastomeric polyester material of suberin monomers and pentacyclic triterpenoid(s), the amount of the cross-linked elastomeric polyester material included in the hundred rubber. The cross-linked elastomeric polyester material of suberin monomers and pentacyclic triterpenoid(s) is a renewable material, and thus the tyre comprises a renewable constituent.

Further, herein is provided use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a pneumatic tyre for a vehicle.

Yet further, herein is provided a tyre rubber component that comprises an amount of at least 2 phr of cross-linked elastomeric polyester material of suberin monomers and pentacyclic triterpenoid(s), the amount of the cross-linked elastomeric polyester material included in the hundred rubber. The cross-linked elastomeric polyester material of suberin monomers and pentacyclic triterpenoid(s) is a renewable material, and thus the tyre rubber component comprises a renewable constituent.

Thus, herein is further provided use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a tyre rubber component.

A tyre rubber component containing an amount of at least 2 phr of the cross-linked elastomeric polyester material of suberin monomers and pentacyclic triterpenoid(s) may be one or more of a sidewall or a bead area component, advantageously clinch and/or apex, or a tread area component, advantageously tread, tread base, undertread, or wing.

Preferably, the tyre rubber component comprises the cross-linked elastomeric polyester material of suberin monomers and pentacyclic triterpenoid(s) in an amount in the range of 2 to 70 phr, more preferably 5 to 50 phr, yet more preferably 5 to 30 phr, even more preferably 5 to 15 phr, the amount of the cross-linked elastomeric polyester material included in the hundred rubber. Advantageously, the amount of the cross-linked elastomeric polyester material of suberin monomers and pentacyclic triterpenoid(s) in the tyre rubber component is at least 5 phr. The cross-linked elastomeric polyester material of suberin monomers and pentacyclic triterpenoid(s) may replace conventional rubber(s) in tyre rubber components in various amounts, depending e.g. on the recipe and targeted properties of the tyre rubber component. It is believed that within the above mentioned ranges tyre rubber component and tyre quality, such as sufficient flexibility or elongation and/or other mechanical properties, can be maintained at an acceptable level while obtaining certain benefits, such as an increased content of renewable constituent(s), and/or compatibilization of constituents of the tyre rubber component.

In addition to the cross-linked elastomeric polyester material of suberin monomers and pentacyclic triterpenoid(s), the tyre rubber component typically comprises one or more further or other rubber(s) in amount(s) yielding a total rubber amount of up to 100 phr. The further rubber(s) may be one or more conventional tyre rubber(s), advantageously one or more of styrene butadiene rubber, referred to as SBR, natural rubber, referred to as NR, isoprene rubber, referred to as IR, epoxidized natural rubber, referred to as ENR, and/or butadiene rubber referred to as BR, in amount(s) yielding a total rubber amount of up to 100 phr. It has been found that the cross-linked elastomeric polyester material of suberin monomers and pentacyclic triterpenoid(s) is compatible with conventional tyre rubbers, and can be mixed or compounded with conventional tyre rubbers to form compositions that are homogeneous enough for use as high quality tyre rubber components for pneumatic tyres for vehicles.

The specific rubbers, i.e. rubber polymers, present in a tyre rubber component or a tyre and their relative amounts may be determined before and/or after curing according to ASTM D3452-06.

The present tyre rubber component may comprise recycled and post-processed material rejected from production of a tyre rubber component and/or a tyre, said postprocessing comprising homogenization of the material. Generally, such recycled and post-processed material comprises rubber(s), filler(s), additive(s), and curing agent(s), and is advantageously selected to have a composition similar to the target composition of the tyre rubber component into which it will be recycled. Such recycled and post-processed material may be recycled within the tyre and/or tyre rubber component production process.

Advantageously, the present tyre rubber component comprises styrene butadiene rubber, referred to as SBR, in addition to the cross-linked elastomeric polyester material of suberin monomers and pentacyclic triterpenoid(s). Accordingly, herein is provided a tyre rubber component that comprises styrene butadiene rubber, preferably solution polymerized styrene butadiene rubber, referred to as SSBR, advantageously in an amount of at least 2 phr, and an amount of at least 2 phr of cross-linked elastomeric polyester material of suberin monomers and pentacyclic triterpenoid(s), the amount of the cross-linked elastomeric polyester material included in the hundred rubber.

Preferably, the tyre rubber component comprises the styrene butadiene rubber in an amount of at least 5 phr, further preferably in the range of 10 to 98 phr, yet further preferably 15 to 95 phr, more preferably 20 to 80 phr, even more preferably 30 to 70 phr. For example, the tyre rubber component may comprise SBR in an amount in the range of 2 to 70 phr.

Experimental studies show that the cross-linked elastomeric polyester material of suberin monomers and pentacyclic triterpenoid(s) can be used to partially replace SBR, especially SSBR, in a tyre rubber component without deteriorating its properties compared to a corresponding tyre rubber component without content of the cross-linked elastomeric polyester material of suberin monomers and pentacyclic triterpenoid(s). In fact, certain properties like tensile properties and/or tear strength may even be improved when replacing a portion of SBR, especially SSBR, with the cross-linked elastomeric polyester material of suberin monomers and pentacyclic triterpenoid(s) in a tyre rubber component. Further, processability may be improved, compared to corresponding components without content of the cross-linked elastomeric polyester material of suberin monomers and pentacyclic triterpenoid(s). The amount of the SBR present in the tyre rubber component may be selected i.a. based on the targeted properties of the tyre rubber component, the extent to which SBR is replaced by the cross-linked elastomeric polyester material of suberin monomers and pentacyclic triterpenoid(s), and/or other rubber(s) optionally present.

In addition to the cross-linked elastomeric polyester material of suberin monomers and pentacyclic triterpenoid(s), the present tyre rubber component may comprise epoxidized natural rubber, referred to as ENR. Advantageously, the present tyre rubber component comprises ENR in an amount of at least 5 phr, preferably in the range of 10 to 30 phr, further preferably 15 to 25 phr. ENR may serve as a compatibilizer in the tyre rubber component improving for example processability of the composition, and/or dispersibility of polar constituents, such as silica. However, ENR as such may reduce tear resistance and/or hardness of the tyre rubber component. It has now been found that when ENR is included in a tyre rubber component comprising the cross-linked polyester material, advantageously in herein discussed amounts, drops in hardness and/or tear resistance may be reduced or prevented, and tear resistance may even be improved. ENR is advantageously comprised in the present tyre rubber component together with SBR, preferably SSBR, preferably in amounts discussed in the foregoing The rubber components in which the rubbers contain or consist substantially of SBR, ENR, and the cross-linked elastomeric polyester material of suberin monomers and pentacyclic triterpenoid(s) may be usable especially as tread area components. Accordingly, the tyre rubber component advantageously comprises styrene butadiene rubber, preferably in an amount of at least 5 phr, further preferably in the range of 15 to 95 phr, more preferably 20 to 80 phr, even more preferably 30 to 70 phr, and epoxidized natural rubber preferably in an amount of at least 5 phr, more preferably in the range of 10 to 30 phr, even more preferably 15 to 25 phr, the total rubber amount yielding up to 100 phr.

Herein is thus provided use of a cross-linked elastomeric polyester material of suberin monomers and pentacyclic triterpenoid(s) to at least partially replace ENR, SBR, preferably SSBR, or both, in a tyre rubber component. Especially, the cross-linked elastomeric polyester material of suberin monomers and pentacyclic triterpenoid(s) may be used to at least partially replace SBR, preferably SSBR, in a tyre rubber component.

Solution-polymerized styrene-butadiene rubber is an elastomer, which belongs to a family of synthetic rubbers derived from styrene and butadiene monomers. SSBR is typically produced by a homogeneous anionic polymerization process, which has been initiated by an alkyl lithium compound and wherein water and oxygen have been excluded. Compared to emulsion-polymerized styrene-butadiene rubber, referred to as ESBR, polymer structure, such as microstructure and/or styrene content, of SSBR can be adjusted by controlling the solution polymerization. Thus, the polymer structure of SSBR may be adjusted to fine-tune properties of the tyre rubber component.

Glass transition refers to a gradual and reversible phenomenon which occurs over a specific temperature range, wherein a polymer or rubber transits between a hard and relatively stiff state, denoted as a glassy state, and a more elastic state, denoted as a rubbery state. At temperatures lower than the glass transition temperature of the rubber, denoted as Tg, the material is in the glassy state and more rigid, whereas in temperatures higher than the Tg, the material is in the rubbery state. In other words, during glass transition, the properties of a polymer or rubber material change gradually, as function of temperature, when the material experiences a specific temperature range. Of notice is, that while the properties of the material change during glass transition, the material still remains in the same phase. Hence, the phenomenon is not a phase transition. Unless otherwise specified, glass transition temperatures are in the context of the present disclosure determined by differential scanning calorimetry, abbreviated as DSC, according to ASTM D7426-24.

The cross-linked elastomeric polyester material of suberin monomers and pentacyclic triterpenoid(s) is typically an amorphous or semi-amorphous material as seen from DSC. The cross-linked elastomeric polyester material of suberin monomers and pentacyclic triterpenoid(s) typically has a glass transition temperature, Tg, in the range of 243 to 203 K (-30 to +30°C), preferably 253 to 293 K (-20 to +20°C), further preferably of 258 to 288 K (-15 to +15 °C), as determined by differential scanning calorimetry according to ASTM D7426-24.

When the present tyre rubber component comprises other rubber(s) in addition to the cross-linked elastomeric polyester material of suberin monomers and pentacyclic triterpenoid(s), one or more of the other rubber(s) may be selected to have a glass transition temperature not too far from the T_{g} of the cross-linked elastomeric polyester material of suberin monomers and pentacyclic triterpenoid(s). The remaining rubber(s), when present, may be selected to provide the tyre rubber component with a predetermined target T_{g}. Selecting at least one rubber having a similar glass transition temperature than the cross-linked elastomeric polyester material of suberinmonomers and pentacyclic triterpenoid(s) facilitates maintaining properties of the tyre rubber component, for example mechanical properties, substantially same or similar when replacing a conventional, such as fossil based, rubber with the cross-linked elastomeric polyester material of suberin monomers and pentacyclic triterpenoid(s). Accordingly, a difference between the glass transition temperature of the cross-linked elastomeric polyester material and of one or more of the other rubber(s) typically comprised in the present tyre rubber component is advantageously equal to or less than 40 K, more advantageously equal to or less than 30 K, even more advantageously equal to or less than 25 K.

Advantageously, the SBR is a SSBR that has a glass transition temperature, T_{g}, in the range of 233 to 273 K (-40 to 0°C), preferably 243 to 263 K (-30 to-10°C), and/or a difference between the glass transition temperature of the cross-linked elastomeric polyester material and the SSBR is equal to or less than 40 K, advantageously equal to or less than 30 K, more advantageously equal to or less than 25 K.

Advantageously, the ENR is an ENR that has a glass transition temperature, T_{g}, in the range of 223 to 263 K (-50 to -10°C), preferably 228 to 258 K (-45 to -15°C), and/or a difference between the glass transition temperature of the cross-linked elastomeric polyester material and the ENR is equal to or less than 40 K, advantageously equal to or less than 30 K, more advantageously equal to or less than 25 K.

It has been found that SSBR and/or ENR can be at least partially replaced in a tyre rubber component by the cross-linked elastomeric polyester material of suberin monomers and pentacyclic triterpenoid(s) having a similar T_{g} without substantially affecting the T_{g} of the tyre rubber component and without deteriorating mechanical properties of the tyre rubber component.

Typically, the tyre rubber component comprises, in addition to rubber, one or more filler, also referred to as reinforcing filler, such as carbon black, recovered carbon black, and/or silica, one or more additive, such as softener(s), antidegradant(s), and/or processing aid(s), and one or more curing agent.

Unfilled rubber compounds rarely demonstrate a sufficient hardness and other mechanical properties and thus a rubber component suitable for a pneumatic tyre typically contains a reinforcing filler material. Reinforcing fillers are generally admixed with the rubber(s) as solid particles also for the purpose of providing strength and resistance to abrasion for the tyre rubber component, once cured.

Advantageously, the present tyre rubber component contains the one or more filler in a total amount in the range of 40 to 125 phr, further preferably 45 to 120 phr, more preferably 50 to 100 phr. Such amounts of reinforcement filler(s) have been found to contribute to sufficient hardness, strength and resistance to abrasion for the present tyre rubber component once cured.

Reinforcing fillers usable in the present tyre rubber component include silica, carbon black, abbreviated CB, recovered carbon black, abbreviated rCB, fillers from renewable sources, or any combination of these. Advantageously, the present tyre rubber component contains silica, or silica and carbon black and/or recovered carbon black, as reinforcement fillers. Silica is beneficial in that it can be obtained from renewable sources, such as rice husk and/or other plant residue, and/or from recycled material, such as recycled tyres and/or industrial waste, and typically decrease rolling resistance, thus contributing to environmental sustainability of the tyre rubber component and desired tyre properties.

Carbon black usable as reinforcing filler in the present tyre rubber component is preferably carbon black that has a specific surface area in the range of 25 to 140 m²/g, further preferably carbon black that has a specific surface area in the range of 25 to 100 m²/g, most preferably a carbon black that has a specific surface area in the range of 60 to 100 m²/g, based on multipoint nitrogen adsorption, determinable according to ASTM D6556-21 of carbon black type filler material.

The silica usable as reinforcement filler in the present tyre rubber component is preferably silica that has a specific surface area in the range of 70 to 250 m²/g, more preferably silica that has a specific surface area in the range of 120 to 220 m²/g, most preferably precipitated amorphous silica, such as HDS silica or RHA silica, that has a specific surface area in the range of 140 to 200 m²/g, based on multipoint nitrogen adsorption, determinable according to ASTM D1993-22. As used herein, HDS refers to highly dispersible silica, and RHA refers to rice husk ash silica.

Compared with carbon black having similar specific surface area, silica as such provides lower degree of reinforcement because it contains a large number of silanol groups (-OH) on the surface, thus making it highly polar and less compatible with conventional tyre rubbers. To improve the reinforcing efficiency of silica to the rubber(s), bifunctional coupling agents are typically used together with silica, such as a silane coupling agent, which bond both to the silica as well as to the polymer chains. The silane coupling agent may be an organosilane. Typically the bifunctional coupling agents comprise a hydrolysable alkoxy group and an organo-functional group, wherein the former is arranged to react chemically with the silanol groups on silica surface while the latter is more compatible with rubbers and can also participate in curing by forming covalent bonds with rubbers.

Recovered carbon black may be considered a beneficial reinforcement filler material from a sustainability point of view as it is obtained from recycling of used tyre rubber components. Pyrolysis processes operated in a reductive environment, typically at a temperature in the range of 400 to 700°C, have been proposed as a means to recycle tyre rubbers from a pneumatic tyre, after non-rubber components, such as metal and textile components of the pneumatic tyre, have been separated from the pneumatic tyre. The pyrolysis of tyre rubbers involves multiple stages, which produce a volatile fraction and a non-volatile fraction. The volatile fraction refers to a gaseous fraction and typically contains condensable gaseous compounds, such as hydrogen and C1 to C4 hydrocarbons. The non-volatile fraction is a solid fraction which remains after separation of the volatile fraction. The non-volatile fraction from the pyrolysis is denoted as recovered carbon black or rCB. The non-volatile fraction from the pyrolysis may also be denoted as pyrolytic carbon black or PCB. The presence of polymers and additives from the tyre rubber components during the pyrolysis leads to the rCB to contain an amount of impurities, such as inorganic minerals and sulphur, which distinguishes it from virgin carbon black. While the composition of rCB may vary with respect to the used feedstock, in general it is characterized by a relatively low porosity and a BET surface area typically in the range of 50 to 80 m²/g, determinable according to ASTM D6556-21.

Curing agents are typically used to facilitate covalent bonding during curing, i.e. vulcanization, after green tyre assembly, which contains carbon-carbon, carbon-sulphur, and/or sulphur-sulphur linkages, depending on the curing process, between molecules. Peroxide curing typically forms carbon-carbon linkages, whereas sulphur vulcanization also forms carbon-sulphur and sulphur-sulphur linkages. The curing agents may comprise substances commonly used for curing or vulcanization of tyre rubber components, such as sulphur, peroxides, resin, or/and metal oxides. The curing agents may contain vulcanization retarders, and/or vulcanization accelerators, such as sulfen-amides, for example N-Cyclohexyl-2-benzothiazole sulphenamide abbreviated as CBS and/or N-tert-butyl-benzothiazole sulfonamine abbreviated as TBBS, zinc carbamates, dithiocarbamates, for example zinc bis(dibenzyldithio-carbamate) abbreviated as ZBEC, guanidines, for example diphenyl guanidine abbreviated as DPG, thiurams, for example tetrabenzylthhiuram disulfide abbreviated as TbzTD, and/or thiazoles, for example 2-mercaptobenzothiazole abbreviated as MBT and/or 2-2'-Dithiobis(benzothiazole) abbreviated as MBTS.

The present tyre rubber component may include oil(s), typically acting as processing aid(s), and/or softener(s). The oil(s) may comprise, for example, one or more of TDAE oil referring to treated distillate aromatic extract, MES oil referring to mild extracted solvate, RAE oil referring to residual aromatic extract, and/or vegetable oil(s), such as sunflower oil, castor oil, or rapeseed oil. Preferably, the oil(s) are selected from one or more of TDAE, RAE, and/or vegetable oil(s). A total amount of the oil(s) in the tyre rubber component may be from 0 to 40 phr.

Advantageously, the present tyre rubber component comprises one or more vegetable oil, such as sunflower oil, rape seed oil, and/or castor oil, preferably in a total amount in the range of 5 to 40 phr, further preferably 8 to 30 phr, more preferably 9 to 20 phr. Vegetable oils are renewable, i.e. biogenic, oils thus being renewable constituents and contributing to environmental sustainability of the present tyre rubber component. Further, it has been found that oxygen contained in the cross-linked elastomeric polyester material of suberin monomers and pentacyclic triterpenoid(s) may improve compatibility or miscibility of vegetable oils in the rubber matrix. The amount of vegetable oil(s) present in the tyre rubber component affects the softness and to some extent T_{g} of the component. A higher amount of vegetable oil typically increases softness of the component. For example treads of winter tyre may contain vegetable oil(s) in an amount towards the higher end of the above ranges, whereas treads of summer tyres typically contain vegetable oil(s) in a lower amount than winter tyre treads.

The present tyre rubber component may comprise resin(s) and/or liquid polymer(s) acting as softeners, processing aids and/or performance additives. The resin(s) may be aliphatic and/or aromatic. The resin(s) may be selected from one or more of petroleum hydrocarbon resin, aromatic vinyl-based resin, phenol-based resin, terpene resin, terpene phenol resin, rosin derived resins and copolymers, and/or mixtures and/or modifications thereof. A total amount of the resins and/or liquid polymer(s) in the tyre rubber component can be in the range of 0 phr to 45 phr, preferably 1 to 30 phr. Technical effect of resins and/or liquid polymers include fine tuning stiffness properties. In curing, liquid polymers typically form bonds with other polymers present, including rubber(s), which prevents drifting after the curing.

Other additives usable in the present tyre rubber component include stearic acid, zinc oxide, abbreviated as ZnO, and/or antidegradants, such as wax, N-(1,3-Dimethylbutyl)-N'- phenyl-p-phenylenediamine, abbreviated as 6PPD, and/or 2,2,4-Trimethyl-1,2- dihydroquinoline, abbreviated as TMQ.

The amount of additives and curing agents used in tyre rubber components for a pneumatic tyre are known in the field and typically vary from less than one part per hundred rubber to a few parts per hundred rubber. Oils, resins, and/or liquid polymers may be present in somewhat higher amounts.

The present tyre rubber component may comprise one or more filler, one or more additive, and one or more curing agent in amounts as explained below:
- filler(s), preferably selected from silica, CB, and/or rCB, in the range of 40 to 125 phr,
- vegetable oil(s) in the range of 0 to 40 phr, preferably of 5 to 40 phr,
- antidegradant(s) in the range of 0 to 10 phr,
- ZnO in an amount in the range of 2 to 4 phr,
- stearic acid in an amount in the range of 1 to 3 phr, and
- curing agents, which comprise vulcanization accelerators in the range of 1 to 5 phr, and sulphur in an amount in the range of 1 to 5 phr.

### Cross-linked elastomeric polyester material of suberin monomers and pentacyclic triterpenoid(s)

The present cross-linked elastomeric polyester material of suberin monomers and pentacyclic triterpenoid(s) is substantially a cross-linked polyester. The cross-linking within polymer molecules of the present material is generally formed through ester bonds between suberin monomers. The present polyester material of suberin monomers and pentacyclic triterpenoid(s) typically forms cross-linked, network-like structures of suberin monomers and pentacyclic triterpenoid(s). The structure of the present cross-linked elastomeric polyester material of suberin monomers and pentacyclic triterpenoid(s) advantageously approaches an infinite network, which means that a majority of the monomeric units available for polymerization have covalently bonded to form larger molecules, including formation of bonds between such larger molecules. A finite molecular weight is typically not determinable for an infinite network. The extent of an infinite network structure may be limited merely by the physical availability of monomers during polymerization. The pentacyclic triterpenoid(s) may be bound to suberin monomers or the polymer molecule through ester bonds, and/or the pentacyclic triterpenoid(s) may interact non-covalently with a crosslinked suberin monomer structure. Without being bound to any theory, it is believed that the network-like structure of the present material is formed by functionalities in suberin monomers in addition to carboxyl and/or hydroxyl end groups, which functionalities have formed ester bonds with carboxyl and/or hydroxyl end groups of other suberin monomers. The inclusion of the pentacyclic triterpenoid(s) affects material properties of the present cross-linked elastomeric polyester material. The cross-linked polyester material of suberin monomers and pentacyclic triterpenoids will in the following be described as such, prior to mixing with any further rubber(s), or filler(s), or other chemical(s), and hence prior to curing or vulcanization.

As discussed in the foregoing, the cross-linked elastomeric polyester material of suberin monomers and pentacyclic triterpenoid(s) can be obtained from bark containing suberin and pentacyclic triterpenoids, especially birch bark. Birch bark typically contains about 20 to 45 wt-% of suberin and about 20 to 35 wt-% of pentacyclic triterpenoids, mainly betulin, of the total dry weight of the birch bark. The cross-linked elastomeric polyester material of suberin monomers and pentacyclic triterpenoid(s) is hence a renewable constituent. The present cross-linked elastomeric polyester material of suberin monomers and pentacyclic triterpenoids can be considered a fully renewable elastomer or rubber. That is, the present cross-linked elastomeric polyester material may contain up to or about 100% renewable (biogenic) carbon as determined by carbon isotope analysis, for example according to ASTM D6866-24a.

Typically, the cross-linked elastomeric polyester material of suberin monomers and pentacyclic triterpenoid(s) contains functionalities capable of participating in curing, i.e. vulcanization, reactions. Advantageously, the cross-linked elastomeric polyester material of suberin monomers and pentacyclic triterpenoid(s) contains carbon-carbon double bonds, epoxy groups, and/or hydroxyl groups, especially carbon-carbon double bonds, and/or hydroxyl groups. The cross-linked elastomeric polyester material may contain further functionalities, such as carboxyl groups, typically as end groups. It is understood that during curing (vulcanization) at least a portion of said functionalities, especially carbon-carbon double bonds and/or epoxy groups, react to form covalent bonds, including carbon-carbon, carbon-sulphur, and/or sulphur-sulphur linkages, depending on the curing process, between molecules. Hence, at least a portion of said functionalities is no longer present as such after curing.

In the bark, suberin typically forms network structures of esterified fatty acids, aromatic compounds, and glycerol. Fatty acid moieties of suberin can be recovered as suberin monomers, mainly in the form of fatty acids containing at least two, or at least three, functionalities that are, independently of each other, one or more of carbon-carbon double bond(s), epoxy group(s), hydroxyl group(s), and/or carboxyl group(s). Some of these functionalities of the suberin monomers form ester bonds and ester cross-links when producing the cross-linked elastomeric polyester material of suberin monomers and pentacyclic triterpenoid(s). However functionalities originating from suberin monomers, in particular carbon-carbon double bond(s), epoxy group(s), hydroxyl group(s), and/or carboxyl groups are typically still present in the cross-linked elastomeric polyester material. In other words, not all functionalities of the suberin monomers react when producing the cross-linked elastomeric polyester material, but a relevant share is typically maintained in the polymerized material. Some of these remaining functionalities, especially carboxyl groups, form end groups of the polyester material, but functionalities within the cross-linked polyester chains are generally also present. Such functionalities within the cross-linked polyester chains, i.e. functionalities in addition to the end groups, are beneficial in that they may participate in curing or vulcanization reactions as discussed above. The functionalities remaining in the material after polymerization, in particular the oxygen containing groups, such as hydroxyl groups, and epoxy groups if present, may contribute to polarity of the present cross-linked polyester material. Said functionalities may interact with other at least slightly polar compounds or materials. This may for example improve compatibility, blending, and/or miscibility of multicomponent mixtures containing the present cross-linked polyester material. For example, compatibility and/or miscibility of components of compounded tyre rubber components, especially compositions containing vegetable oil(s) and/or silica, may be improved by the present cross-linked elastomeric polymer material. Renewable materials or compounds for rubber components, for example vegetable oils and biobased resins, may be more polar than their fossil-based counterparts. The cross-linked elastomeric polyester material may contribute to compatibility of these renewable materials in, typically non-polar, rubber matrixes. Hence, the share of renewable constituents that can be incorporated into a tyre rubber component may be larger.

In view of the above, the cross-linked elastomeric polyester material advantageously contains carbon chain moieties between adjacent ester bonds having, per moiety, one or more of carbon-carbon double bond(s), epoxy group(s), and/or hydroxyl group(s), more advantageously one or more of carbon-carbon double bond(s), and/or hydroxyl group(s). Epoxy groups present in the suberin moieties in the bark may open during separation (isolation) of suberin monomers from the bark and/or during the polymerization to obtain the cross-linked elastomeric polyester material. Generally, opened epoxy groups form hydroxyl groups.

The carbon chain moiety may have a carbon chain extending between adjacent ester bonds, i.e. it is a moiety, wherein two adjacent ester bonds are spaced apart and linked by a carbon chain. In the context of the present disclosure, ester bond includes the ester carbon bound to two oxygen atoms. Some carbon chain moieties of the present polyester material contain, per moiety, at least one functionality that is one or more of carbon-carbon double bond(s), epoxy group(s), and/or hydroxyl group(s). The carbon chain moiety may contain, per moiety, one of carbon-carbon double bond, epoxy group, and/or hydroxyl group. The rest of the carbon chain moiety may be or consist substantially of saturated carbon and hydrogen atoms. The present cross-linked polyester material may contain carbon chain moieties having a carbon-carbon double bond, carbon chain moieties having a hydroxyl group, and carbon chain moieties having an epoxy group. Typically, the present cross-linked polyester material contains at least carbon chain moieties having, per moiety, one or more carbon-carbon double bond(s) and carbon chain moieties having, per moiety, one or more hydroxyl group(s).

Although the present cross-linked elastomeric polyester material contains a plurality of carbon chain moieties having at least one functionality as described above, not every carbon chain extending between adjacent ester bonds necessarily contains a functionality. Some carbon chains extending between adjacent ester bonds in the cross-linked elastomeric polyester material may be unsubstituted, saturated alkyl chains. Typically, the carbon chains extending between adjacent ester bonds, including the carbon chain moieties having at least one functionality as described above, are acyclic (notwithstanding any epoxy group(s) with an oxygen atom forming a ring). Advantageously, the majority, i.e. at least 50 wt-%, of the carbon chains extending between adjacent ester bonds are carbon chain moieties having, per moiety, one or more of carbon-carbon double bond(s), epoxy group(s), and/or hydroxyl group(s). The present cross-linked elastomeric polyester material may, in addition to the above described functionalities of the carbon chain moieties, contain carboxyl and/or hydroxyl end groups. Some carbon chains of the cross-linked elastomeric polyester material may end into a pentacyclic triterpenoid moiety, such pentacyclic triterpenoid moiety thus serving as an end group. The chains extending between an end group and its adjacent ester bond may contain one or more of carbon-carbon double bond(s), epoxy group(s), and/or hydroxyl group(s).

Advantageously, at least 90 wt-%, more advantageously at least 95 wt-%, of the total dry weight of the cross-linked elastomeric polyester material of suberin monomers and pentacyclic triterpenoids are suberin monomers and/or suberin monomer moieties and pentacyclic triterpenoid(s). It is understood that in the cross-linked elastomeric polyester material the suberin monomers have mostly or even substantially undergone polymerization reactions and that pentacyclic triterpenoid(s) may to some extent be covalently bonded to polymerized, i.e. esterified, suberin monomers and/or interact non-covalently with the esterified suberin monomers. In addition to suberin monomer moieties and pentacyclic triterpenoid(s), the cross-linked elastomeric polyester material may contain other constituents. Based on the dry weight of the cross-linked elastomeric polyester material, the cross-linked elastomeric polyester material of suberin monomers and pentacyclic triterpenoid(s) advantageously contains up to 10 wt-%, preferably less than 10 wt-% or 5 wt-% or less, other constituents, such as residual salt(s), ion(s), and/or small organic molecules typically having a carbon number of C6 or below.

The cross-linked elastomeric polyester material typically comprises pentacyclic triterpenoid(s) in an amount of at least 2 wt-%, such as in the range of 2 to 15 wt-%, based on the total dry weight of the cross-linked elastomeric polyester material. The pentacyclic triterpenoid(s) may be covalently bonded to the polyester structure of suberin monomers and/or otherwise included in the cross-linked elastomeric polyester material. It is believed that the pentacyclic triterpenoid(s) affect the structure of the cross-linked polyester network, thus affecting material properties of the cross-linked elastomeric polyester material. For example, a high wt-% share of pentacyclic triterpenoid(s) in the cross-linked elastomeric polyester material, such as above 15 wt-%, typically results in a stiffer and more brittle, less elastic material. A high amount of pentacyclic triterpenoids may interfere with the polymerization when producing the present material. The identity and wt-% of pentacyclic triterpenoid(s) is determinable by means of GC/MS which may be complemented by ¹H NMR and/or ¹³C NMR. The GC/MS analyses are advantageously carried out as described by Ferreira et al, in Industrial Crops and Products 44 (2013), 520-527*.*

The pentacyclic triterpenoid(s) may comprise one or more of betulin, betulinic acid, lupeol, betulin aldehyde, and/or oleanolic acid. Especially, pentacyclic triterpenoids refer herein to pentacyclic triterpenoids containing four interconnected six membered ring structures and one five membered ring structures. Such pentacyclic triterpenoids are in the context of the present disclosure referred to as lupane type triterpenoids, as they share the carbon ring structure of lupane. Preferably, the pentacyclic triterpenoid(s) comprise at least betulin or at least betulin and betulinic acid. Betulin may make up 50 wt-% or more of the pentacyclic triterpenoid(s), based on the total dry weight of the pentacyclic triterpenoid(s). Such pentacyclic triterpenoid(s) can be obtained from birch bark together with suberin monomers, for example as will be described herein.

At least a portion of the pentacyclic triterpenoid(s) may contain one or more hydroxyl group(s), carbon-carbon double bond(s), and/or carboxyl group(s). Hydroxyl and/or carboxyl groups of the pentacyclic triterpenoid(d) may form ester bonds with the suberin monomers, or interact and/or react with other molecules and/or materials present in a tyre rubber component, for example other slightly polar materials and thus contribute to their blending, compatibility, and/or miscibility with non-polar components.

The presence of pentacyclic triterpenoid(s) contained in the cross-linked elastomeric polyester material is determinable by means of Pyrolysis-Gas Chromatography/Mass Spectrometry (Py-GC/MS) when pyrolysed at 340 °C. The presence of pentacyclic triterpenoid(s) can be detected by means of Py-GC/MS analysis from the tyre rubber component, before or after curing, and/or from a rubber sample obtained from the tyre, when pyrolyzed at 340 °C. It was found that when Py-GC/MS samples were subjected to acetone extraction during sample preparation, a distinction could be made between pentacyclic triterpenoids, in particular betulin, that had been mixed into a rubber composition as such, and pentacyclic triterpenoid(s) contained in the present cross-linked elastomeric polyester material of suberin monomers and pentacyclic triterpenoid(s). In samples subjected to acetone extraction during sample preparation, pentacyclic triterpenoid(s), such as betulin, mixed into a rubber composition as such could not be detected by Py-GC/MS while pentacyclic triterpenoid(s) contained in the cross-linked elastomeric polyester material of suberin monomers and pentacyclic triterpenoid(s) were detectable by the same Py-GC/MS method. This finding shows that pentacyclic triterpenoid(s) form indeed part of the cross-linked present cross-linked elastomeric polyester material of suberin monomers and pentacyclic triterpenoid(s), and indicates that pentacyclic triterpenoid(s) may even be covalently bonded to the polyester structure.

The suberin monomers, before polymerization, may be fatty acids, especially aliphatic, linear fatty acids (notwithstanding any epoxy group(s) that may be present). As is appreciated by the person skilled in the art, a fatty acid contains at least one carboxyl group. Of the suberin monomers at least 75 wt-% can be fatty acids containing, before polymerization, at least two functionalities that are, independently from each other, carbon-carbon double bond(s), epoxy group(s), carboxyl group(s), and/or hydroxyl group(s). Preferably, of the suberin monomers at least 25 wt-% are fatty acids containing at least three functionalities that are, independently from each other, carbon-carbon double bond(s), epoxy group(s), carboxyl group(s), and/or hydroxyl group(s). Advantageously, of the suberin monomers at least 3 wt-% and optionally at most 50 wt-% contain one or more carbon-carbon double bond, based on the total dry weight of the suberin monomers. The suberin monomers typically have carbon numbers in the range of C14-C24. Carbon atoms are generally not lost during polymerization or esterification of suberin monomers.

Suberin monomers obtainable from birch, especially *Betula pendula, Betula papyrifera,* and/or *Betula alleghaniensis,* may comprise one or more of hydroxy-1,18-dioic-18:1 acid, 9,10,18-trihydroxy-18:0 acid, 22-hydroxy-22:0 acid, 18-hydroxy-(9)18:1 acid, 1,22-dioic-22:0 acid, 1,18-dioic-(9)18:1 acid, 20-hydroxy-20:0 acid, 9,16-dihydroxy-16:0 acid, 10,16-dihydroxy-16:0 acid, 20-hydroxy-20:1 acid, 9,18-dihydroxy-(9)18:1 acid, and/or 1,20-dioic-20:0 acid. When the present material is obtained from birch bark, these fatty acids may be the major suberin monomers, present in a total amount of at least 50 wt-%, based on the total dry weight of the suberin monomers. Accordingly, the suberin monomers may comprise one or more of 9,10,18-trihydroxy-18:0 acid, 22-hydroxy-22:0 acid, 18-hydroxy-(9)18:1 acid, 1,22-dioic-22:0 acid, 1,18-dioic-(9)18:1 acid, 20-hydroxy-20:0 acid, 9,16-dihydroxy-16:0 acid, 10,16-dihydroxy-16:0 acid, 20-hydroxy-20:1 acid, 9,18-dihydroxy-(9)18:1 acid, and/or 1,20-dioic-20:0 acid, preferably in a total amount of at least 50 wt-%, based on the total dry weight of the suberin monomers. A typical epoxy containing fatty acid obtainable from birch bark suberin is 9, 10-epoxy-18-hydroxy octadecanoic acid. Identity and quantification data of suberin monomers can be determined by GC/MS and GC/FID, respectively, prior to polymerization. The GC/MS and GC/FID analyses are advantageously carried out as described in Heinimäki et al, J. Nat. Prod. 2017, 80, 916-924*,* on p. 922 under *Physicochemical Material Characterization.*

Preferably, the mol:mol ratio of aliphatic hydroxyl groups to aliphatic carboxyl groups of the suberin monomers and pentacyclic triterpenoids combined is within a range from 0.8 to 2.5, as determined by P-NMR. This ratio gives the ratio of aliphatic hydroxyl groups to aliphatic carboxyl groups before polymerization, and accounts for aliphatic hydroxyl groups and aliphatic carboxyl groups in the suberin monomers and in the pentacyclic triterpenoids. The P-NMR analysis is advantageously carried out as described by Meng, X., et al. in Nat Protoc 14, 2627-2647 (2019*).*

Typically, the cross-linked elastomeric polyester material of suberin monomers and pentacyclic triterpenoid(s) has a density in the range of 0.85 to 1.70 kg/d³, such as 0.95 to 1.70 kg/dm³, as determined according to ISO 2781:2018. Typically, the cross-linked elastomeric polyester material has a hardness in the range of 35 to 45 ShA, as determined according to ASTM D2240-15(2021) at 25 °C.

Typically, the cross-linked elastomeric polyester material of suberin monomers and pentacyclic triterpenoid(s) has a solubility in acetone at most 30 wt-%, preferably at most 20 wt-%, more preferably at most 15 wt-%, based on the total weight of the cross-linked elastomeric polyester material, as determined according to ASTM D297-21 except that acetone extraction is carried out with boiling acetone for 1h. Limited solubility in acetone indicates degree of polymerization of the cross-linked elastomeric polyester material, a lower solubility in acetone being indicative of a higher degree of polymerization. During acetone extraction, unpolymerized monomers, oligomers, residual impurities, and/or a portion of the pentacyclic triterpenoid(s) are believed to be extracted from the cross-linked elastomeric polyester material. Hence, the acetone solubility is affected by purity, extent of polymerization, and/or content of pentacyclic triterpenoid(s) of the cross-linked elastomeric polyester material.

The cross-linked elastomeric polyester material may have a water contact angle in the range of 75° to 90°. Water contact angle may be determined as static contact angle determined from an image of a side view of a water droplet on a substantially planar sample of the present cross-linked polyester material.

### Method for producing the cross-linked elastomeric polyester material of suberin monomers and pentacyclic triterpenoid(s)

The present cross-linked elastomeric polyester material may be produced by separating (isolating) suberin monomers and pentacyclic triterpenoid(s) from bark, advantageously birch bark, in same method steps, recovering the suberin monomers and pentacyclic triterpenoid(s) together in a coprecipitation, and subjecting the precipitate to polymerization as such or simply after drying. The amount of pentacyclic triterpenoids may be controlled by suitable solvent selection.

Especially, the cross-linked elastomeric polyester material may be produced by a method comprising:
providing mechanically disintegrated bark, the bark containing suberin and pentacyclic triterpenoid(s),
extracting the bark with a mixture of a polar alcohol and water and recovering a solid fraction comprising suberin and pentacyclic triterpenoid(s),
subjecting the solid fraction to alkaline hydrolysis to obtain a depolymerized fraction comprising suberin monomers and pentacyclic triterpenoid(s),
recovering and drying the depolymerized fraction comprising suberin monomers and pentacyclic triterpenoid(s) to obtain a dried fraction,
solubilizing the dried fraction in an aqueous solvent to obtain an aqueous solution comprising suberin monomers and pentacyclic triterpenoid(s),
co-precipitating suberin monomers and pentacyclic triterpenoid(s) from the aqueous solution through acidification and recovering a precipitate comprising suberin monomers and pentacyclic triterpenoid(s),
subjecting the precipitate, optionally after drying, to polymerization, optionally in the presence of a catalyst, to obtain the cross-linked elastomeric polyester material of suberin monomers and pentacyclic triterpenoid(s).

The above method steps are typically carried out consecutively, in the order indicated above. The method may be carried out without other organic solvents than polar alcohol. Especially, the method may be carried out without extraction with other organic solvents than polar alcohol. The absence of other organic solvents than polar alcohol constitutes a more environmentally process compared to processes employing such other organic solvent(s). In the context of the present disclosure, especially present method, water refers advantageously to deionized water.

In the context of the present disclosure, mechanical disintegration refers to mechanically reducing the size of the bark to particles, fragments, or parts, i.e. mechanically breaking up the bark into smaller pieces or particles. The mechanically disintegrated bark may be shredded and/or powdered, preferably powdered. The mechanical disintegration may be carried out for example by milling, cutting, crushing, and/or shredding, preferably milling and/or shredding, more preferably milling. The mechanical disintegration of the bark may be carried out before the extracting of the bark.

The method comprises subjecting the provided mechanically disintegrated bark to extraction with a mixture of polar alcohol and water, also referred to herein as extraction solvent. Advantageously, the mixture, i.e. extraction solvent, comprises water in an amount in the range of 5 to 35 wt-%, preferably 7 wt-% to 35 wt-%, more preferably 10 wt-% to 35 wt-%, based on the total weight of the mixture. The remainder of the mixture typically consist substantially of ethanol. Accordingly, the combined amount of polar alcohol and water in said mixture, i.e. extraction sovent, is advantageously 100 wt-%. The extraction may be carried out at reflux conditions, preferably under stirring. Typically, the mixture of polar alcohol and water has a temperature of at least 50 °C, such as in the range of 50 to 150 °C. The duration of the extraction step is advantageously at least 15 min, such as 15 to 60 min. Advantageously, the polar alcohol is ethanol. Inclusion of water in the extraction solvent increases its polarity compared to the polar alcohol. The mixture of polar alcohol and water extracts pentacyclic triterpenoids, such as betulin, from the bark, however, to a lesser degree compared to extracting with a polar alcohol, such as ethanol, thus increasing the share of pentacyclic triterpenoid(s) in the solid fraction. Thus both suberin and pentacyclic triterpenoid(s) can be recovered from the extraction in the solid fraction. Further to the suberin and pentacyclic triterpenoid(s), the solid fraction recovered from extraction typically contains complexes of lignin and carbohydrates. The solid fraction may be recovered from the extraction by any suitable means.

After the extraction, the recovered solid fraction comprising suberin and pentacyclic triterpenoids is subjected to alkaline hydrolysis, preferably at a temperature within a range from 60 °C to 90 °C, more preferably from 70 °C to 80 °C, to obtain a depolymerized fraction comprising suberin monomers and pentacyclic triterpenoid(s). The hydrolysis is advantageously carried out under stirring. The alkaline hydrolysis depolymerizes at least suberin thus forming suberin monomers. The depolymerized fraction is a liquid fraction, and may be referred to as hydrolysate. The suberin monomers obtained in the alkaline hydrolysis step comprise fatty acids and are generally suberin monomers as described in the foregoing. The alkaline hydrolysis may be carried out in a mixture, also referred to herein as hydrolysis solvent, of polar alcohol, advantageously ethanol, and water, the mixture containing strong base, typically a hydroxide, such as NaOH and/or KOH. Preferably, said mixture contains polar alcohol, advantageously ethanol, in an amount in the range of 60 to 95 wt-%, water in an amount in the range of 5 to 40 wt-%, and hydroxide, such as sodium hydroxide, in an amount in the range of 0.5 to 8 wt-%, based on the total weight of the mixture. The combined amount of polar alcohol, water and the hydroxide in the mixture or hydrolysis solvent is advantageously 100 wt-%. The duration of the alkaline hydrolysis may be within the range of 1 to 5 hours, such as 2 to 4 hours.

The depolymerized fraction, i.e. hydrolysate, is recovered and dried to obtain a dried fraction. Recovering the depolymerized fraction may comprise separating the depolymerized fraction (liquid fraction) from the solid fraction (spent bark) by filtering. The solid fraction may be washed, for example with a polar alcohol, such as ethanol. The solid fraction from the hydrolysis contains spent bark comprising typically lignin carbohydrate complexes. The drying of the recovered depolymerized fraction may be carried out by any suitable means. The drying may comprise heating optionally under reduced pressure (compared to atmospheric pressure). For example, the drying may be carried out at a temperature of 60 °C and a pressure of 72 mbar(a) or less. Advantageously, the drying is continued until a solid dried fraction is obtained.

The dried fraction comprises suberin monomers and pentacyclic triterpenoid(s). The dried fraction is solubilized in an aqueous solvent, preferably deionized water, to obtain an aqueous solution comprising suberin monomers and pentacyclic triterpenoid(s). The solubilization may be carried out under stirring. Suberin monomers and pentacyclic triterpenoid(s) are co-precipitated from the aqueous solution through acidification of the aqueous solution. It has been found that by drying the recovered hydrolysate followed by dissolving it in an aqueous environment, generally without any purification steps or treatments in between, suberin monomers and pentacyclic triterpenoid(s) can be co-precipitated via acidification. Advantageously, the acidification comprises acidifying the aqueous solution to a pH in the range of 2 to 5, preferably 3 to 4. The acidification may be carried out with a dilute strong acid, such as a 5 wt-% sulphuric acid solution in water (based on the total weight of the sulphuric acid solution). Suberin monomers and pentacyclic triterpenoid(s) are recovered in the precipitate formed during acidification of the aqueous solution. Recovering the precipitate may comprise separating the precipitate from the acidified liquid phase advantageously by filtration. After recovery, the precipitate is optionally dried. Drying the precipitate may facilitate the polymerization. The drying of the precipitate may be carried out under reduced pressure and/or increased temperature (compared to atmospheric pressure and room temperature, respectively), for example in a rotary evaporator or vacuum oven. Advantageously, the temperature is maintained at or below 90 °C during drying of the precipitate to prevent polymerization.

The precipitate subjected to polymerization typically contains suberin monomers and pentacyclic triterpenoids in total at least 90 wt-%, preferably at least 95 wt-% of the total weight of said precipitate. In addition to the suberin monomers and pentacyclic triterpenoids, the precipitate may contain inorganic ion(s) and/or inorganic salt(s) originating from the alkaline hydrolysis and the acidification, up to about 4 wt-%, based on the total dry weight of the precipitate. Other constituents of the precipitate may include small organic molecules typically having a carbon number of C6 or below. Accordingly, the present cross-linked elastomeric polyester material may comprise inorganic ion(s) and/or inorganic salt(s) in a total amount within a range from 0.01 wt-% to 4 wt-%, based on the total dry weight of the cross-linked elastomeric polyester material. The amount of inorganic ion(s) and/or inorganic salt(s) is determinable by elemental analysis.

The recovered precipitate, optionally after drying, is subjected to polymerization to obtain the cross-linked elastomeric polyester material of suberin monomers and pentacyclic triterpenoid(s). The polymerization may be melt polymerization. Alternatively, the polymerization may be carried out in the presence of a solvent. The polymerization typically occurs through polycondensation. The polymerization may comprise melting the optionally dried precipitate, preferably at a temperature within a range from 60 to 90 °C, more preferably from 75 to 85 °C. The polymerization, especially melt polymerization, may be carried out at a temperature above 100 °C, preferably in the range of 100 to 200 °C, such as 120 °C, typically following the melting if implemented. Such temperatures allow water that forms in the polycondensation to evaporate. Polymerization in presence of a solvent and/or catalyst may be carried out at temperatures of about 60 °C or above such as within a range from 60 to 180 °C or 60 to 100°C. The duration of the polymerization may be for example in the range of 36 to 50 h. If a catalyst is used, the polymerization time, i.e. duration of the polymerization, may be reduced to for example a time in the range of 5 to 120 minutes. Generally, the polymerization is carried out until a solid cross-linked elastomeric polyester material of suberin monomers and pentacyclic triterpenoids is produced.

The polymerisation may be carried out without a catalyst. Alternatively, the polymerisation may be carried out in the presence of a catalyst. The catalyst may be an acid, advantageously a strong acid, such as sulphuric acid. In embodiments wherein acid is used as polymerization catalyst, the method typically comprises melting the optionally dried precipitate as detailed above, followed by adding one or more acid, preferably strong acid(s), such as sulfuric acid, to the polymerisation in an amount up to 5 wt-% based on the total dry weight of the precipitate, and carrying out the polymerisation at a temperature within a range from 60 to 180°C or from 60 to 100°C optionally at reduced pressure (compared to atmospheric pressure) or vacuum conditions. The duration of such polymerisation is typically in the range of about 5 to about 120 minutes The use of a catalyst may decrease the reaction temperature and/or reaction time, which improves efficiency and industrial viability of the method.

During the polymerization, carboxyl groups and hydroxyl groups and/or epoxy groups of at least suberin monomers, and perhaps also of pentacyclic triterpenoids, react to form ester bonds. Under the present polymerization conditions, however, not all functionalities in the suberin monomers will necessarily react. After polymerization, the present cross-linked polyester material typically still contains, as described in the foregoing, carbon-carbon double bond(s), epoxy group(s), and/or hydroxyl group(s). The functionalities remaining in the cross-linked polyester material allow for example curing reactions, such as sulphur vulcanization or peroxide curing.

The cross-linked elastomeric polyester material of suberin monomers and pentacyclic triterpenoid(s) is advantageously obtained or obtainable by the above-described method.

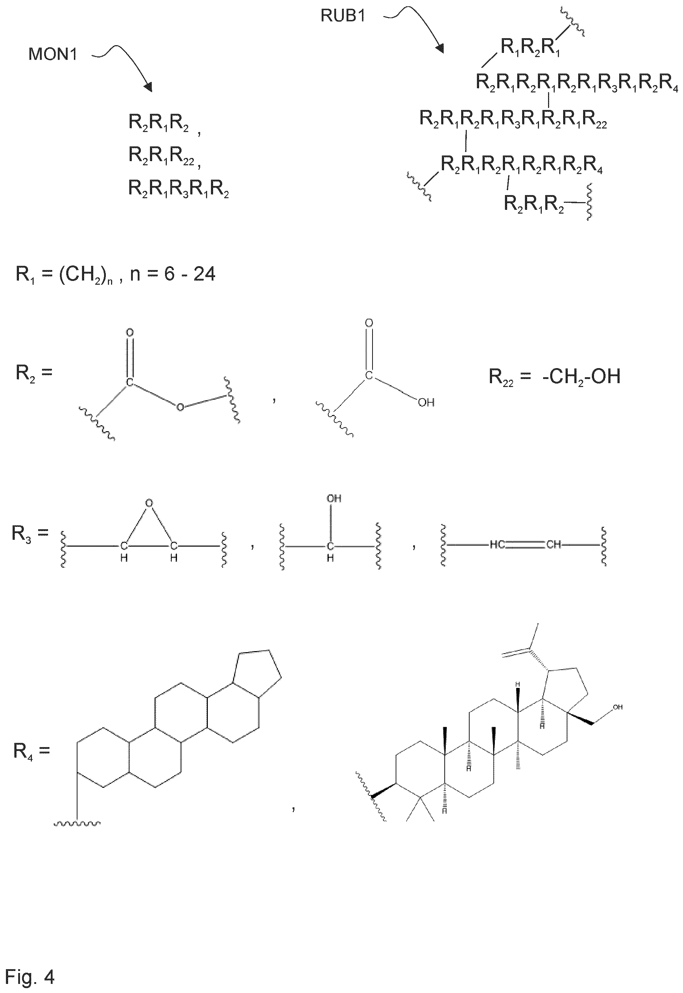

Fig. 4 shows schematic illustrations of some exemplary structural constituents of the present cross-linked elastomeric polyester material RUB1. Suberin monomers MON1 are typically aliphatic, substantially linear carboxylic acids.. The structure of a suberin monomer MON1 may or may not contain an epoxy group, a hydroxyl group, and/or a carbon-carbon double bond, in addition to the end groups, which in the MON1 examples of Fig. 4 are carboxyl groups or a carboxyl group and a hydroxyl group. Fig. 4 illustrates schematically a part of a cross-linked elastomeric polyester material RUB1 structure, containing structural constituents, such as suberin monomers MON1 connected to each other through ester bonds, the esterified suberin monomers MON1 denoted by combinations of R₂, R₁, R₃, and R₂₂ where R₂ denotes an ester bond or a carboxyl group when an end group, R₁ denotes an alkyl chain, R₃ denotes an epoxy group, a carbon containing a hydroxyl group, or carbons connected by a carbon-carbon double bond, and R₂₂ denotes a saturated carbon atom with a hydroxyl end group. It is noted that in the schematic illustration of Fig. 4, when two suberin monomers MON1 react to form an ester bond, an R₂ will denoted said bond and in a sense replace the groups that participated in the reaction. Typically, suberin monomers have carbon numbers within a range from C14 to C24. In the schematic illustration of Fig. 4, the alkyl chain R₁ has a n, corresponding to carbon number, of 6 to 24. When a functionality denoted by R₃ is present, the n is on the lower side of the range. On the other hand, if no functionality denoted by R₃ is present between the end groups of MON1, then n is towards the upper end of the range. It is to be noted that Fig. 4 is provided merely for illustrative purposes. As schematically illustrated by Fig. 4, functionalities of the suberin monomers MON1 denoted by R₃, and R₂ and R₂₂ with respect to end groups, may be maintained in the cross-linked polyester material RUB1 after polymerization. The linkages between suberin monomers MON1 in the cross-linked elastomeric polyester material RUB1 are ester bonds R₂ between the alkyl chains R₁. However, as illustrated by RUB1 in Fig. 4, not all carbon chains between ester bonds R₂ contain a functionality denoted by R₃, whereby the polyester material RUB1, may contain stretches of saturated, unsubstituted alkyl chains. Pentacyclic triterpenoid(s) or betulin, denoted by R4, may be connected to the cross-linked network of esterified suberin monomers by covalent ester bonds, or interact non-covalently with the cross-linked network of esterified suberin monomers. It is to be noted that the suberin monomers RUB1 and the polymer structure RUB1 are merely schematic examples provided for illustrative purposes to explain functionalities present in the molecular structures. Suberin monomers identical to those depicted by MON1 are not necessarily present, and/or different suberin monomers may be present. Similarly, the cross-linked elastomeric polyester material of suberin monomers and pentacyclic triterpenoid(s) may or may not contain a structure as depicted by RUB1.

### Methods for producing a tyre rubber component and a pneumatic tyre comprising cross-linked elastomeric polyester material of suberin monomers and pentacyclic triterpenoid(s)

A pneumatic tyre for a vehicle, especially motor vehicle, is typically manufactured by preparing one or more tyre rubber components, which are assembled into a green tyre with one or more textile and metal components. A tyre rubber component is prepared by mixing step-wise together rubber, and typically one or more filler, one or more additive, and one or more curing agent, into a composition and shaping the composition into a tyre rubber component. Once the components have been arranged into a green tyre, the green tyre is cured. The curing refers to a chemical reaction, wherein the curing agents are used to form a covalent bond, thereby bonding the components firmly together. The most typical curing is sulphur vulcanization, wherein sulphur crosslinks are formed between molecules. However, other types of curing, such as peroxide curing, metal ion curing, and/or curing with resin may be employed.

Thus, herein is provided a method for producing a tyre rubber component, the method comprising: mixing step-wise together a composition comprising rubber, reinforcement filler, additive(s), and curing agent(s), and shaping the composition into a tyre rubber component suitable for curing, wherein the rubber comprise an amount of at least 2 phr of cross-linked elastomeric polyester material of suberin monomers and pentacyclic triterpenoid(s), the amount of the cross-linked elastomeric polyester material included in the hundred rubber.

Advantageously, the cross-linked elastomeric polyester material is cross-linked elastomeric polyester material of suberin monomers and pentacyclic triterpenoid(s) as described in the foregoing. Advantageously, the composition shaped into the tyre rubber component has a composition as described in the foregoing with reference to the tyre rubber component.

For example, the rubber preferably comprises the cross-linked elastomeric polyester material of suberin monomers and pentacyclic triterpenoid(s) in an amount in the range of 2 to 70 phr, further preferably 5 to 50 phr, more preferably 5 to 30 phr, even more preferably 5 to 15 phr, the amount of the cross-linked elastomeric polyester material included in the hundred rubber. In addition to the cross-linked elastomeric polyester material of suberin monomers and pentacyclic triterpenoid(s), the rubber typically comprises one or more further (other) rubbers in amounts yielding a total rubber amount of up to 100 phr. The further rubber(s) are advantageously one or more of styrene butadiene rubber (SBR), natural rubber (NR), isoprene rubber (IR), epoxidized natural rubber (ENR), and/or butadiene rubber (BR), in amount(s) yielding a total rubber amount of up to 100 phr. Advantageously, the rubber comprises SBR, advantageously in an amount of at least 2 phr. Preferably, the rubber comprises the SBR in an amount of at least 5 phr, further preferably in the range of 10 to 98 phr, yet further preferably 15 to 95 phr, more preferably 20 to 80 phr, even more preferably 30 to 70 phr, such as 2 to 70 phr. The rubber may comprise ENR preferably in an amount of at least 5 phr, preferably in the range of 10 to 30 phr, further preferably 15 to 25 phr.

When the present tyre rubber component comprises other rubber(s) in addition to the cross-linked elastomeric polyester material of suberin monomers and pentacyclic triterpenoid(s), the method for producing a tyre rubber component may comprise selecting one or more of the other rubber(s) to have a glass transition temperature that differs from the glass transition temperature of the cross-linked elastomeric polyester material of suberin monomers and pentacyclic triterpenoid(s) at most 40 K, advantageously equal to or less than 30 K, more advantageously equal to or less than 25 K. The remaining rubber(s), when present, may be selected to provide the tyre rubber component with a predetermined target T_{g}. For example, the method for producing a tyre rubber component may comprise selecting a SBR and/or an ENR having a glass transition temperature that differs from the glass transition temperature of the cross-linked elastomeric polyester material of suberin monomers and pentacyclic triterpenoid(s) at most 40 K, more advantageously equal to or less than 30 K, even more advantageously equal to or less than 25 K.

The composition from which the tyre rubber component is shaped typically contains one or more filler, one or more additive, and one or more curing agent as described in the foregoing, with reference to the tyre rubber component. It is understood that in the shaping no further constituents are generally added to or removed from the composition. Thus, the composition of which the tyre rubber component is shaped substantially equals the composition of the tyre rubber component obtained by the method.

The mixing of the composition suitable for being shaped into a tyre rubber component is advantageously a mechanical step-wise mixing process which is typically performed in a mixer, such as an internal batch mixer. In the context of the present disclosure, step-wise mixing refers to addition of constituents in more than one steps. The mixing may be continuous, or it may be intermittent mixing with or without removing the mixture from the mixer between mixings. Typically, first at least part or all of the rubber is added and mixed together, such that a rubber mixture is obtained. In a second step, at least part or all of the filler-type and/or additive material, such as carbon black, silica and silane, oil and other additives, is typically added and mixed, the curing agents, such as accelerator and sulphur, typically added in a further, often final, mixing step such that a composition is obtained. The selection of mixer temperature during the mixing, the mixing power, step time and rotor speed of the used mixer may be defined based on the target specifications for the composition and are well known in the field. Typical mixing times used per step may vary from less than a minute to a few minutes or longer, as necessary, depending of the compositions. When silica and silane is added into the composition, the obtained composition is subsequently heated, such that a silanization reaction takes place. Silanization is typically performed in a temperature in the range of 416 to 443 K (143 to 170°C) for 2 to 10 minutes, the reaction conditions based on the selected silane and/or silica. The curing agent(s) are added and mixed later, in a final mixing step, at a temperature below 373 K (100°C).

The shaping of the composition into a tyre rubber component may involve extrusion, wherein the composition is forced through a die opening and may be carried out by means of a barrel to a die. Multiple barrels may be used for feeding a single die, thereby allowing co-extrusion of different composition into a die and the simultaneous forming of multiple tyre rubber components. The composition may be shaped into a tyre rubber component that is a non-tread area component, such as sidewall or a bead area component, such as clinch, or apex, or a tread area component, such as tread, tread base, undertread, or wing. Compositions or components co-extruded with the present tyre rubber component may or may not contain cross-linked elastomeric polyester material of suberin monomers and pentacyclic triterpenoid(s), independently of each other.

Fig. 2 shows schematically a method for producing a tyre rubber component comprising cross-linked elastomeric polyester material of suberin monomers and pentacyclic triterpenoid(s). A tyre rubber component TRB1 is produced by mechanically mixing 11 stepwise together rubber comprising cross-linked elastomeric polyester material of suberin monomers and pentacyclic triterpenoid(s) RUB1 and optionally at least another rubber RUB2, such as SBR, one or more filler FIL1, one or more additive ADD1, one or more curing agent VUL1 such that a composition CMP1 is obtained. As indicated in Fig. 2, the cross-linked elastomeric polyester material of suberin monomers and pentacyclic triterpenoid(s) RUB1, the optional other rubber RUB2, and the one or more filler FIL1 may be mixed together in a first step, followed by addition of one or more additive ADD1, and one or more curing agent VUL1 and further mixing. The composition CMP1 is then shaped 12 into the tyre rubber component TRB1.

Herein is further provided a method for manufacturing a pneumatic tyre for a vehicle, the method comprising providing a tyre rubber component as described in the foregoing, arranging the tyre rubber component onto a building drum to form a tubular preform, expanding the tubular preform to form a preform of a pneumatic tyre, arranging a metal component and a textile component onto the preform of a tyre, thereby manufacturing a preform of a pneumatic tyre comprising the tyre rubber component, and curing the preform of a pneumatic tyre, thereby bonding the components together by means of curing and thereby manufacturing the pneumatic tyre for a vehicle.

The assembling of the preform of a pneumatic tyre is well known in the field. The preform of a pneumatic tyre is sometimes referred to as green tyre. The green tyre is typically inserted into a mould for curing. During curing, the mould is heated, typically by means of super-heated steam or hot water, such that a rapid rise in temperature and even temperature distribution is obtained for the tyre rubber components of the green tyre. When the curing is a sulphur vulcanization process, the green tyre GT1 is typically heated into a temperature which is in the range of 423 K to 463 K (150 to 190°C). As disclosed above, during a vulcanization reaction the curing agents and sulphur present in the rubber components enable cross-linking reactions to take place, which bond the tyre components firmly together. The curing times, temperatures and pressures are known in the field and typically vary, depending of the tyre rubber components chosen for the pneumatic tyre and the type of the pneumatic tyre. Standard passenger car tyres are typically cured from few minutes up to half an hour, such as in the range of 5 to 30 minutes.

Reference is made to Fig. 3, which illustrates an exemplary overall method from production of the tyre rubber component to the manufacturing of the pneumatic tyre TYR1. The tyre rubber component TRB1 is produced as described with reference to Fig. 2 above by shaping 12 a composition obtained by mechanical stepwise mixing 11, the composition CMP1 containing cross-linked elastomeric polyester material of suberin monomers and pentacyclic triterpenoid(s) RUB1, and optionally at least another rubber RUB2, such as SBR, one or more filler FIL1, one or more additive ADD1, and one or more curing agent VUL1. The tyre rubber component TRB1 is assembled 13 into a preform of a pneumatic tyre, also referred to as a green tire GT1, typically together with at least a further tyre rubber component TRB2 and metal and textile components, followed by curing 14 thereby bonding the components together by means of curing and thereby manufacturing the pneumatic tyre for a vehicle TYR1. The further tyre rubber component TRB2 may or may not be a tyre rubber component according to the present disclosure containing cross-linked elastomeric polyester material of suberin monomers and pentacyclic triterpenoid(s).

### Pyrolysis gas chromatography mass spectrometry method for determining presence of pentacyclic triterpenoid(s) contained in the cross-linked elastomeric polyester material of suberin monomers and pentacyclic triterpenoid(s)

The presence of pentacyclic triterpenoid(s) contained in the cross-linked elastomeric polyester material of suberin monomers and pentacyclic triterpenoid(s) is determinable by means of Pyrolysis-Gas Chromatography/Mass Spectrometry analysis from a tyre rubber component or cured tyre rubber component, when pyrolysed at 340 °C. That is, the presence of pentacyclic triterpenoid(s) contained in the cross-linked elastomeric polyester material can be detected by means of Py-GC/MS analysis from a sample obtained from a tyre rubber component, before or after curing, and/or from a rubber sample obtained from a tyre, when pyrolyzed at 340 °C.

The Py-GC/MS analysis, including sample preparation, is advantageously carried out as described below.

*Sample preparation:* A rubber sample is obtained, typically from a tyre or tyre rubber component (before or after curing). The rubber sample is broken down into smaller pieces, for example by cutting and/or milling. The sample, once in smaller pieces, is then subjected to acetone extraction in a suitable device, for example in a Soxtec 8000 device by Foss. The acetone extraction is carried out as described in ASTM D297-21, except that the acetone is boiling and the acetone extraction is carried out for 1 hour. The acetone extraction is followed by rinsing the sample with acetone for 2 hours. Then, the rubber sample is dried and stored for analysis.

*Py-GC*/*MS of rubber sample:* The rubber sample (solid) from acetone extraction is placed into a sample holder as is. The sample size is 1 mg and a pyrolysis temperature of 340°C is selected. The Py-GC/MS method is based on ISO 10638:2017 with certain exceptions, such as a GC ramp as follows: start, hold at 40 °C 1 min, raise to 100 °C by 5 °C per minute, raise to 300 °C by 20 °C per minute, hold in 300 °C for 10 minutes. The Py-GC/MS is carried out using a suitable analysis instrument, such as Shimadzu GC-MS QP2010 Ultra with Auto Injector AOC-20i, Multi-shot Pyrolyzer EGA/PY-3030D (Manufacturer: FrontierLab), and Column SH-Rxi-1ms 30 m, thickness 0.25 µm, diameter 0.25mm. The carries gas is advantageously He and split ratio 200. In the MS, solvent cut time of 0.5 min can be used, the MS scan range being from m/z 35 to m/z 500.

Typically, when the rubber sample contains cross-linked elastomeric polyester material of suberin monomers and pentacyclic triterpenoid(s), one or more clear peaks can be detected between retention times 25.0 and 32.0 min in the gas chromatogram. Especially, a peak or peaks can be detected at one or more of retention times within the ranges from 25.4 to 25.8 min, from 26.4 to 26.9 min, and/or from 28.5 to 28.9 min when the sample contains cross-linked elastomeric polyester material of suberin monomers and pentacyclic triterpenoid(s). Advantageously, at least a peak at retention time within the range from 25.4 to 25.8 min and retention time within the range from 26.4 to 26.9 min are detected when the sample contains cross-linked elastomeric polyester material of suberin monomers and pentacyclic triterpenoid(s). The peak(s) can be identified by MS to contain one or more, advantageously at least two, of the following mass peaks: m/z 189, 203, 207, 363, and/or 406. When the sample does not contain cross-linked elastomeric polyester material of suberin monomers and pentacyclic triterpenoid(s), peaks between retention times 25.0 and 32.0 min are generally absent in the gas chromatogram.

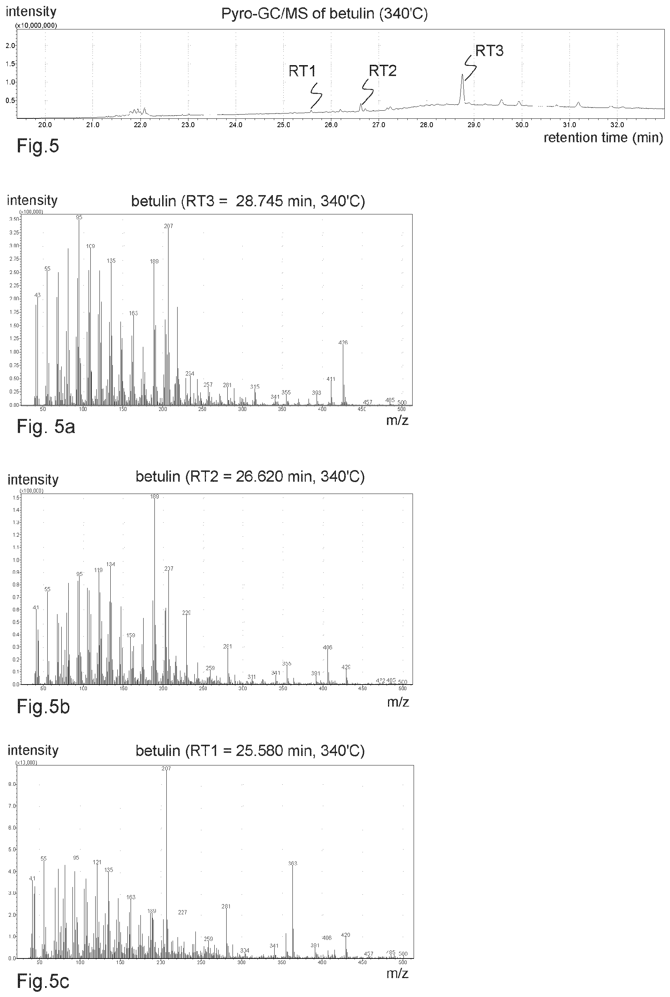

Figs. 5 to 5c show results of a Py-GC/MS analysis of a reference sample of betulin. Betulin is a pentacyclic triterpenoid generally present in birch bark, thus serving as an exemplary pentacyclic triterpenoid for the Py-GC/MS analysis. The Py-GC/MS analysis was carried out as described above, except that the betulin sample was not subjected to the sample preparation. Fig. 5 shows the Py-GC/MS gas chromatogram of betulin. As seen in Fig. 5, three peaks at retention times RT1, RT2, and RT3, respectively, are identifiable between retention times 25.0 and 32.0. Fig. 5a shows the mass spectrum at RT3 (28.745 min) of the chromatogram of Fig. 5. In said mass spectrum, a clear m/z 189 and 207 peaks are present. Fig. 5b shows the mass spectrum at RT2 (26.620 min) of the chromatogram of Fig. 5, showing presence of m/z 189, 207, and 406 peaks. Fig. 5c shows the mass spectrum at RT1 (25.580 min) of the chromatogram of Fig. 5. In the mass spectrum at RT1, m/z 207, 363, and 406 peaks are present. Figs. 5 to 5c thus give a reference Py-GC/MS of a pentacyclic triterpenoid.

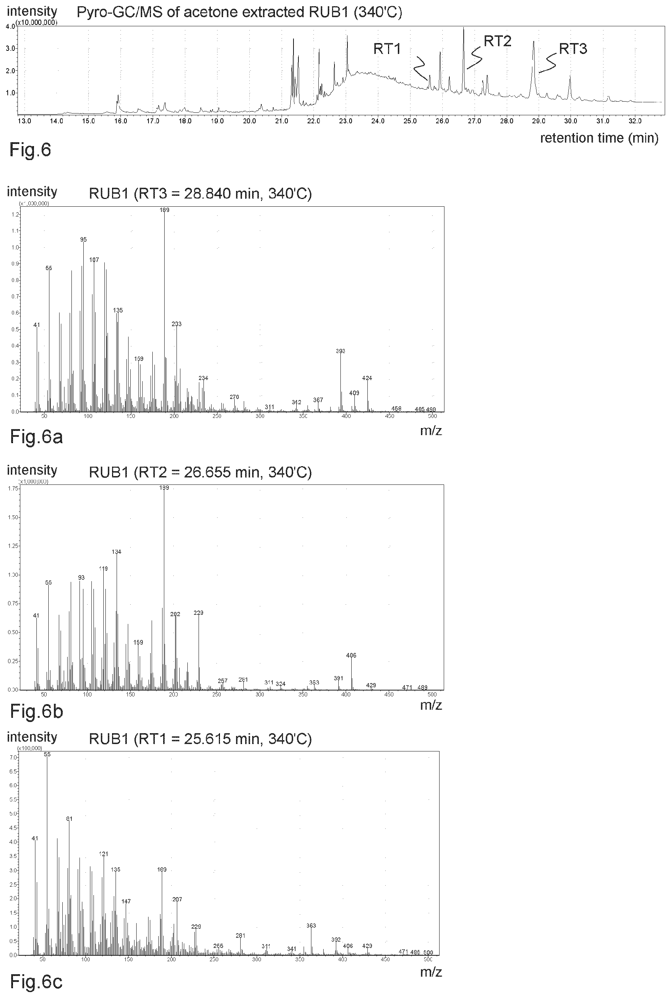

Detection of pentacyclic triterpenoid(s) contained in the cross-linked elastomeric polyester material of suberin monomers and pentacyclic triterpenoid(s) is shown with reference to Figs. 6 to 6c . Figs. 6 to 6c show results of a Py-GC/MS analysis, carried out as described above including sample preparation, of a reference sample RUB1 of cured cross-linked elastomeric polyester material of suberin monomers and pentacyclic triterpenoid(s). Fig. 6 shows the Py-GC/MS gas chromatogram of the acetone extracted sample of RUB1. As seen in Fig. 6, three peaks at RT1, RT2, and RT3 are identifiable between retention times 25.0 and 32.0 min. These peaks RT1, RT2, and RT3 have retention times substantially corresponding to RT1, RT2, and RT3, respectively, of the betulin chromatogram of Fig. 5. The skilled person appreciates that some variations in corresponding retention times may occur between samples and/or Py-GC/MS runs. Fig. 6a shows the mass spectrum at RT3 (28.840 min) of the chromatogram of Fig. 6, showing presence of m/z peaks 189 and 203. Fig. 6b shows the mass spectrum at RT2 (26.655 min) of the chromatogram of Fig. 6, and presence of clear m/z 189 and 406 peaks and a small m/z 363 peak. Fig. 6c shows the mass spectrum at RT1 (25.615 min) of the chromatogram of Fig. 6, showing presence of m/z peaks 189, 207, 363, and 406. The presence of peaks at corresponding retention times RT1, RT2, and RT3 as well as presence of two or more of mass peaks m/z 189, 203, 207, 363, and/or 406 in the mass spectra at RT1, RT2, and RT3, confirms presence of betulin and/or other pentacyclic triterpenoid(s) in the cross-linked elastomeric polyester material of suberin monomers and pentacyclic triterpenoid(s).

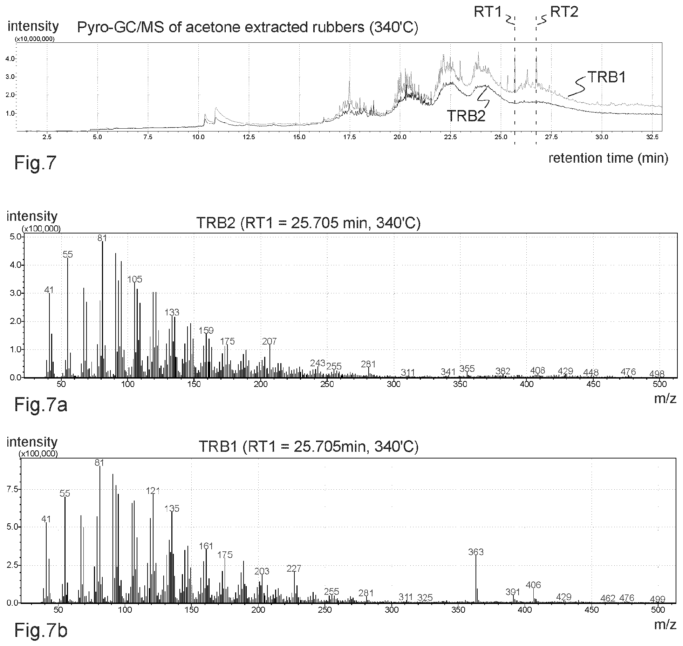

A comparison was made between Py-GC/MS results obtained from a sample of a cured tyre rubber component comprising cross-linked elastomeric polyester material of suberin monomers and pentacyclic triterpenoid(s) TRB1, and from a reference sample of a cured tyre rubber component without content of cross-linked elastomeric polyester material of suberin monomers and pentacyclic triterpenoid(s) TRB2. The TRB1 used in this Py-GC/MS comparison contained the cross-linked elastomeric polyester material of suberin monomers and pentacyclic triterpenoid(s) in an amount of 10 phr. Otherwise, TRB1 and TRB2 used in this Py-GC/MS comparison had corresponding compositions. The Py-GC/MS analysis was carried out as described above, including the sample preparation. Fig. 7 shows Py-GC/MS gas chromatograms of TRB1 and TRB2, respectively. As seen in Fig. 7, the chromatogram of TRB2 lacking content of cross-linked elastomeric polyester material of suberin monomers and pentacyclic triterpenoid(s) did not present any peaks between retention times 25.0 and 32.0, whereas the chromatogram of TRB1 containing cross-linked elastomeric polyester material of suberin monomers and pentacyclic triterpenoid(s) had clear peaks at RT1 and RT2, substantially corresponding to RT1 and RT2, respectively, of the chromatograms of Figs. 5 and 6. Already based on the gas chromatograms, TRB1 comprising cross-linked elastomeric polyester material of suberin monomers and pentacyclic triterpenoid(s) can be clearly identified and distinguished from TRB2 by its pentacyclic triterpenoid peaks at retention times RT1 and RT2. Fig. 7a shows the mass spectrum of TRB2 at RT1 (25.705 min). Said spectra contains a m/z 207 peak, but lacks any other of mass peaks m/z 189, 203, 363, and 406. Fig. 7b shows the mass spectrum of TRB1 at RT1 (25.705 min), in which mass peaks m/z 203, 363, and 406 are present. The peaks at RT1 (25.705 min) and RT2 (26.6 min) in the chromatogram together with the presence of the mass peaks m/z 203, 363, and 406 shows presence of cross-linked elastomeric polyester material of suberin monomers and pentacyclic triterpenoid(s) in TRB1. The above described Py-GC/MS analysis, including sample preparation, can thus be used to identify and distinguish tyre rubber components (before or after curing) comprising cross-linked elastomeric polyester material of suberin monomers and pentacyclic triterpenoid(s) from tyre rubber components (before or after curing) without it, including rubber samples obtained from tyres.

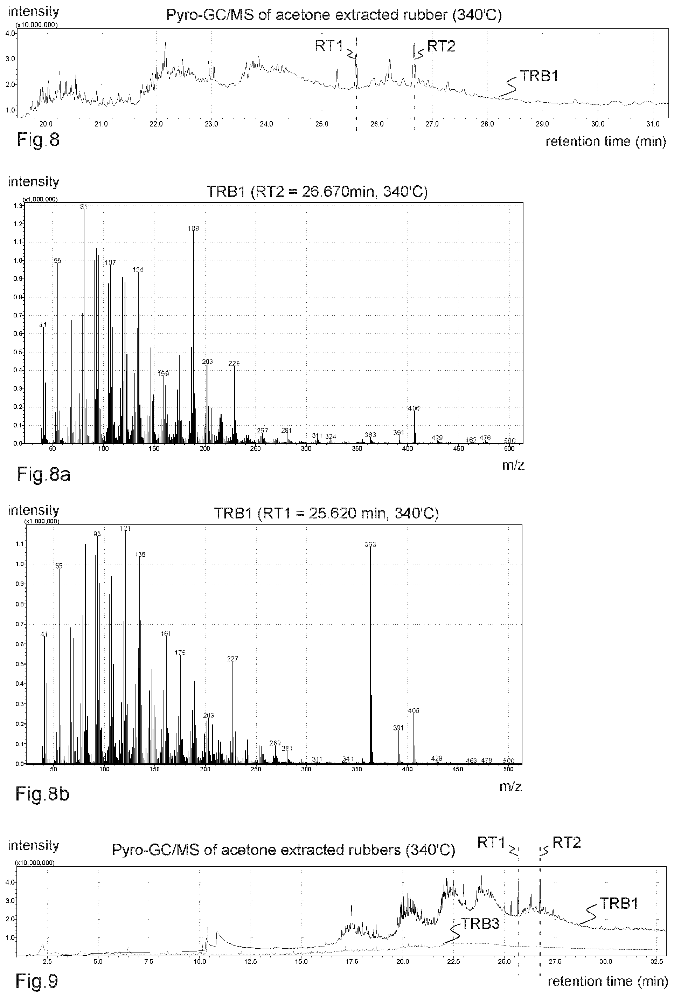

Figs. 8 to 8b show results of a Py-GC/MS analysis of a sample of a cured tyre rubber component comprising 10 phr cross-linked elastomeric polyester material of suberin monomers and pentacyclic triterpenoid(s) TRB1. The Py-GC/MS analysis was carried out as described above, including sample preparation. Fig. 8 shows the Py-GC/MS gas chromatogram of TRB1 with clear peaks at RT1 (25.620 min) and RT2 (26.670 min), corresponding to RT1 and RT2 of the chromatograms of Figs.5, 6 and 7. Fig. 8a shows the mass spectrum at RT1 (25.620 min), showing presence of mass peaks m/z 189, 203, and 406, and a small m/z 363 peak. Fig. 8b shows the mass spectrum at RT2 (26.670 min) with presence of mass peaks m/z 203, 363, and 406. Figs. 8 to 8c further support the above findings that presence of the cross-linked elastomeric polyester material can be identified by its pentacyclic triterpenoid peaks at RT1 and RT2 in the gas chromatogram together with the presence of mass peaks m/z 189, 203, 207, 363, and/or 406 at RT1 and RT2, respectively.

The above described Py-GC/MS analysis, including sample preparation, is able to distinguish between tyre rubber components containing cross-linked elastomeric polyester material of suberin monomers and pentacyclic triterpenoid(s) from tyre rubber components shaped from a composition into which a pentacyclic triterpenoid has been mixed as such. Fig. 9 shows Py-GC/MS gas chromatograms of a sample of a cured tyre rubber component comprising 10 phr cross-linked elastomeric polyester material of suberin monomers and pentacyclic triterpenoid(s) TRB1, and of a reference sample of a cured tyre rubber component comprising betulin TRB3, respectively. In the reference sample TRB3, betulin was mixed into the composition prior to shaping and curing the tyre rubber component and TRB3 did not contain of the cross-linked elastomeric polyester material of suberin monomers and pentacyclic triterpenoid(s). The Py-GC/MS measurement was carried out as described above, including sample preparation. Fig. 9 shows that the chromatogram of TRB1 comprising cross-linked elastomeric polyester material of suberin monomers and pentacyclic triterpenoid(s) had clear peaks at RT1 (25.7 min) and RT2 (26.6), corresponding to RT1 and RT2 of the chromatograms of Figs. 5, 6, 7, and 8. However, the chromatogram of TRB3 did not have any peaks between retention times 25.0 and 32.0 min, despite the content of betulin in the initial TRB3 sample. This suggests that the acetone extraction of the sample preparation removes mixed-in pentacyclic triterpenoid(s) from the solid rubber sample, whereas pentacyclic triterpenoid(s) of the cross-linked elastomeric polyester material remain at least to some extent in the solid sample after the acetone extraction, and are thus detectable by the Py-GC/MS. Fig. 9 demonstrates that when sample preparation includes acetone extraction as described above, it is possible to distinguish (before or after curing) between tyre rubber components that comprise cross-linked elastomeric polyester material of suberin monomers and pentacyclic triterpenoid(s) from tyre rubber components comprising pentacyclic triterpenoid(s) as such. The finding that pentacyclic triterpenoid(s) contained in the cross-linked elastomeric polyester material of suberin monomers and pentacyclic triterpenoid(s) withstand the acetone extraction during sample preparation suggests that pentacyclic triterpenoid(s) strongly interact with the esterified suberin monomers and form covalent bonds with suberin monomers during the polymerization.

Taken together, Figs. 5 to 9 show that the presence of pentacyclic triterpenoid(s) contained in the cross-linked elastomeric polyester material of suberin monomers and pentacyclic triterpenoid(s) is determinable by means of Py-GC/MS analysis from a tyre rubber component or cured tyre rubber component, including a sample obtained from a tyre, when pyrolysed at 340 °C. The herein described Py-GC/MS method, including sample preparation comprising acetone extraction, further allows to distinguish between presence of pentacyclic triterpenoid(s) contained in the cross-linked elastomeric polyester material of suberin monomers and pentacyclic triterpenoid(s) from presence of pentacyclic triterpenoid(s) as such in a tyre rubber component (before or after curing). The above described Py-GC/MS method, including sample preparation, can thus be used for identifying tyre rubber components that comprise cross-linked elastomeric polyester material of suberin monomers and pentacyclic triterpenoid(s), before or after curing, including rubber samples from tyres.

### Examples

Experimental studies reported hereafter explain benefits of the description above in more detail.

### Example 1.1 - Method for producing cross-linked elastomeric polyester material

Cross-linked elastomeric polyester material of suberin monomers and pentacyclic triterpenoid(s) was produced from industrial birch bark. 1 kg of milled birch bark was extracted in a glass reactor with a pre-heated water-ethanol mixture containing 14.4 wt-% water and 85.6 wt-% ethanol at reflux conditions for 30 min using vigorous stirring. Then, the extract (liquid phase) was separated from the spent bark (solid phase) by vacuum filtration. Residual extract was removed from the spent bark filter cake (solid phase) through washing it with pre-heated ethanol (96 vol-%).

The resulting 0.85 kg of spent bark (solid phase, dry weight) was recovered and then subjected to alkaline hydrolysis in 3.4 kg pre-heated solution (85 wt-% ethanol, 12.1 wt-% water, 2.95 wt-% NaOH) at 65°C for 60 min under vigorous stirring. Then, the hydrolysate (liquid, depolymerized phase) was separated from the spent bark (solid hydrolysis residue) by vacuum filtration. Residual hydrolysate (liquid, depolymerized phase) was removed from the spent bark filter cake through washing it with pre-heated ethanol (96 vol-%), and the total of the obtained hydrolysate (liquid, depolymerized phase) was recovered. The recovered hydrolysate was then evaporated at 60°C under vacuum of up to 72 mbar(a) until a solid (dried fraction) was formed.

Next, the dried solid (dried fraction) was solubilized in distilled water under vigorous stirring. Then, a solution of 5 wt-% sulphuric acid in water was added step-wise under vigorous stirring until the formed suspension reached a pH of 3-4. Co-precipitated suberin monomers and pentacyclic triterpenoid(s) (precipitate) were isolated from the suspension via filtration and drying.

This dried precipitate of suberin monomers and pentacyclic triterpenoid(s) was then polymerized into a cross-linked elastomeric polyester material of suberin monomers and pentacyclic triterpenoid(s) at 120°C for 46 hours as melt polymerisation without catalyst.

### Example 2.1 - Method for producing tyre rubber components

Tyre rubber components containing rubbers, reinforcement filler, additives, and curing agents were produced. The tyre rubber components were then vulcanized with the aid of the curing agents at elevated temperature to form vulcanized tyre rubber components. A comparison was made between vulcanized tyre rubber components according to the present disclosure containing cross-linked elastomeric polyester material of suberin monomers and pentacyclic triterpenoid(s), and reference vulcanized tyre rubber components containing conventional rubbers without content of the cross-linked elastomeric polyester material of suberin monomers and pentacyclic triterpenoid(s).

The cross-linked elastomeric polyester material of suberin monomers and pentacyclic triterpenoids, denoted RUB1, used in these examples was obtained according to Example 1.1. Said cross-linked elastomeric polyester material of suberin monomers and pentacyclic triterpenoid(s) had a glass transition temperature, T_{g}, of -1 °C (272 K) and an acetone soluble fraction of 10 wt-%. The T_{g} was determined by differential scanning calorimetry, abbreviated as DSC, according to ASTM D7426-24, and the acetone soluble fraction was determined according to ASTM D297-21 except that acetone extraction was carried out with boiling acetone for 1h.

The other rubbers used in these examples were solution styrene-butadiene rubber denoted SSBR, and technically specified epoxidized natural rubber denoted ENR, to produce compositions which represent tread area components of pneumatic tyres.

Four different compositions as detailed in Table 1 were prepared. D2 contained 90 phr SSBR and 10 phr cross-linked elastomeric polyester material of suberin monomers and pentacyclic triterpenoid(s), and D1, a corresponding reference example, contained 100 phr of the SSBR. D4 contained 70 phr SSBR, 20 phr ENR, and 10 phr cross-linked elastomeric polyester material of suberin monomers and pentacyclic triterpenoid(s), and D3, a corresponding reference example, contained 80 phr SSBR and 20 phr ENR. That is, in compositions D2 and D4, SSBR had been partially replaced with the cross-linked elastomeric polyester material of suberin monomers and pentacyclic triterpenoids compared to the corresponding reference example. Except for the rubbers, the compositions D1, D2, D3, and D4 had same constituents.

**Table 1. Compositions of tyre rubber components. RUB1 denotes cross-linked elastomeric polyester material of suberin monomers and pentacyclic triterpenoid(s). All values are given as phr, RUB1 included in the hundred rubber.**

| | D1 (ref) | D2 | D3 (ref) | D4 |
|---|---|---|---|---|
| SSBR | 100 | 90 | 80 | 70 |
| RUB1 | - | 10 | - | 10 |
| ENR | - | - | 20 | 20 |
| Silica | 49 | 49 | 49 | 49 |
| Rape seed oil | 9 | 9 | 9 | 9 |
| Polyethylene glycol, PEG | 4 | 4 | 4 | 4 |
| CB N-375 | 5 | 5 | 5 | 5 |
| Organosilane, TESPT | 4.9 | 4.9 | 4.9 | 4.9 |
| ZnO | 3 | 3 | 3 | 3 |
| Stearic acid | 2 | 2 | 2 | 2 |
| TMQ | 1 | 1 | 1 | 1 |
| 6PPD | 1 | 1 | 1 | 1 |
| Ceresin wax | 1.5 | 1.5 | 1.5 | 1.5 |
| CBS | 1.75 | 1.75 | 1.75 | 1.75 |
| ZBEC | 0.3 | 0.3 | 0.3 | 0.3 |
| Sulphur | 1.75 | 1.75 | 1.75 | 1.75 |

Commercial grade silica having specific surface area 160 m²/g BET, was used as reinforcing filler in each of the tyre rubber components D1, D2, D3, and D4. Sulphur was included for curing, i.e. sulphur vulcanization.

The compositions D1, D2, D3, and D4 of Table 1 were obtained, respectively, by a step-wise mechanical mixing process using a 1.5L-internal mixer, namely Krupp Elastomertechnik GK 1,5 laboratory mixer. In a first step, the rubbers, including RUB1 if present, and polyethylene glycol, carbon black and a portion of the silica and organosilane were added and mixed for 40 seconds. In a second step, oil and the remainder of the silica were added and mixing was continued for 60 seconds. In a third step, the remaining chemicals as detailed in Table 1, except for curing agents CBS, ZBEC, and sulphur, were added and mixing was continued for 50 seconds. The obtained mixtures were silanized at 143-148°C for 2 min. After the silanization, the mixtures were, respectively, taken out from the mixer and left to cool to room temperature. At a final stage the silanized mixtures were, respectively, added into the mixer with the curing agents CBS, ZBEC, and sulphur, and mixed in a final mixing step for 50 seconds or until mixing temperature increased to 100°C.

Tyre rubber components were formed by shaping the compositions into substantially flat sheets having a sheet thickness of 2 mm. The obtained tyre rubber components were vulcanized at 160°C and 150 bar. The optimum vulcanization time of t90 at 160°C was determined with a moving die rheometer according to ASTM D5289-19a. A vulcanization time of t90 plus 5 min was used for components to be used in tensile, tear, and DMA studies. The vulcanized tyre rubber components were conditioned for 16 hours prior to subjecting them to testing as detailed in Example 2.2 below.

### Example 2.2 - Testing of the tyre rubber components

Tensile stress and tear strength of vulcanized tyre rubber components obtained as described in Example 2.1 were studied. Tensile stress-strain properties according to ISO 37:2024 (dumb-bell test piece Type 1), and the tear strength according to ISO 34-1:2022 method C were evaluated with a tensiometer at room temperature.

The tensile strength at 300% strain represents the modulus at 300% strain, denoted M300. The tear strength represents the maximum force required to tear a specified test piece, in continuation of a nick already produced in the test piece, completely across the width of the test piece. The tensile strength tests were performed on dumb-bell test pieces, and the tear strength tests on crescent test pieces. The test pieces were cut from a vulcanized tyre rubber component having a sheet thickness of 2 mm.

Temperature dependent visco-elastic properties of the vulcanized tyre rubber components according to Example 2.1 were determined using a Dynamic Mechanical Analyzer, abbreviated as DMA, according to ISO 4664-1:2022. The DMA tests were performed on a sample cut to dimension 50 mm × 6 mm × 2 mm from a vulcanized tyre rubber component. The temperature sweep tests were performed in tension mode, at 3% static strain and 10 Hz frequency.

Hardness of the vulcanized tyre rubber components according to Example 2.1 was determined according to ASTM D2240-05 using a durometer.

Results of the above tests are reported in Table 2. In Table 2, D1, D2, D3, and D4 denotes test pieces cut from vulcanized tyre rubber components shaped from corresponding composition D1, D2, D3, or D4 of Table 1, respectively.

**Table 2. Results of tensile stress and tear strength studies and DMA testing of vulcanized tyre rubber components of compositions D1, D2, D3, and D4.**

| | D1 (ref) | D2 | D3 (ref) | D4 |
|---|---|---|---|---|
| Hardness, ShA | 62 | 65 | 61 | 65 |
| Tensile Strength, MPa | 16.8 | 16.9 | 15.5 | 15.8 |
| Elongation, % | 332 | 371 | 333 | 360 |
| Mod300%, MPa | 14.2 | 13.4 | 13.4 | 12.8 |
| Tear Strength (crescent), N/mm | 32 | 37 | 31 | 38 |
| Tg, °C | -7.8 | -7.7 | -10.5 | -10.5 |

In Table 2, T_{g} is T_{g} of the vulcanized tyre rubber component as obtained with DMA according to ISO 4664-1:2022.

As seen from the results in Table 2, partially replacing SSBR with cross-linked elastomeric polyester material of suberin monomers and pentacyclic triterpenoid(s) provided substantially at least as good tensile properties as the corresponding reference example. The glass transition temperature was in these experiments not noteworthily altered upon inclusion of the cross-linked elastomeric polyester material of suberin monomers and pentacyclic triterpenoids. Partial replacement of the SSBR with the cross-linked elastomeric polyester material of suberin monomers and pentacyclic triterpenoids did however increase tear strength and hardness compared to the corresponding reference example. Also elongation was increased by the partial replacement of the SSBR with the cross-linked elastomeric polyester material of suberin monomers and pentacyclic triterpenoids, compared to the corresponding reference example.

The results of Table 2 further show that a decrease in hardness and tensile strength caused by inclusion of ENR, as observed upon comparison of reference components D1 and D3, could be compensated by inclusion of the cross-linked elastomeric polyester material of suberin monomers and pentacyclic triterpenoid(s), as seen by comparing D4 with reference example D3. Especially hardness was increased when ENR was contained in the tyre rubber component together with the cross-linked elastomeric polyester material of suberin monomers and pentacyclic triterpenoid(s).

Based on the results reported in Table 2, it can be concluded that the cross-linked elastomeric polyester material of suberin monomers and pentacyclic triterpenoid(s) can be included in tyre rubber components while maintaining satisfactory properties. Especially, the cross-linked elastomeric polyester material of suberin monomers and pentacyclic triterpenoid(s) can replace SSBR in a tyre rubber component or vulcanized tyre rubber component without deteriorating its properties. Rather, certain properties, such as tear strength and/or hardness, may even increase or improve compared to a corresponding reference tyre rubber component without the cross-linked elastomeric polyester material of suberin monomers and pentacyclic triterpenoid(s). Also, hardness and/or tensile strength of tyre rubber components that contain ENR can be increased by inclusion of the cross-linked elastomeric polyester material in the tyre rubber component. Accordingly, the cross-linked elastomeric polyester material of suberin monomers and pentacyclic triterpenoid(s) obtained from birch bark provides a renewable rubber type material obtainable form a sawmill industry side stream that can be used in rubber components of pneumatic tyres and which does not deteriorate and may even improve certain properties, especially when replacing SSBR in part and/or compounded with ENR.

The examples above illustrate that the cross-linked elastomeric polyester material of suberin monomers and pentacyclic triterpenoids can be used for producing a more environmentally sustainable tyre rubber component. The experimental results also indicate the presence of functional groups, such as pentacyclic triterpenoid(s), in the cross-linked elastomeric polyester material, which may interact with other constituents in the tyre rubber component and provide enhanced functionality.

For the person skilled in the art, it will be clear that modifications and variations of the present disclosure are perceivable. The figures are meant to be illustrative and to be read together with the description above. Any particular examples described above are illustrative only and not meant to limit the scope of the invention, which is defined by the appended claims.

## Claims

1. A tyre rubber component that comprises a renewable constituent, wherein the tyre rubber component comprises an amount of at least 2 phr of cross-linked elastomeric polyester material of suberin monomers and pentacyclic triterpenoid(s), the amount of the cross-linked elastomeric polyester material included in the hundred rubber.

2. A method for producing a tyre rubber component that comprises a renewable constituent, the method comprising:
- mixing step-wise together a composition comprising rubber, one or more filler, one or more additive, and one or more curing agent, and
- shaping the composition into a tyre rubber component suitable for curing,
wherein the rubber comprises an amount of at least 2 phr of cross-linked elastomeric polyester material of suberin monomers and pentacyclic triterpenoid(s), the amount of the cross-linked elastomeric polyester material included in the hundred rubber.

3. The tyre rubber component according to claim 1 or the method for producing a tyre rubber component according to claim 2, wherein the tyre rubber component or the rubber comprises the cross-linked elastomeric polyester material in an amount in the range of 2 to 70 phr, preferably 5 to 50 phr, further preferably 5 to 30 phr, more preferably 5 to 15 phr.

4. The tyre rubber component or the method for producing a tyre rubber component according to any one of the preceding claims, wherein the tyre rubber component or the rubber comprises one or more of styrene butadiene rubber, natural rubber, isoprene rubber, epoxidized natural rubber, and/or butadiene rubber, in amount(s) yielding a total rubber amount of up to 100 phr.

5. The tyre rubber component or the method for producing a tyre rubber component according to any one of the preceding claims, wherein the tyre rubber component or the rubber comprises styrene butadiene rubber, such as solution polymerized styrene butadiene rubber, preferably in an amount of at least 5 phr, further preferably in the range of 10 to 98 phr, yet further preferably 15 to 95 phr, more preferably 20 to 80 phr, even more preferably 30 to 70 phr.

6. The tyre rubber component or the method for producing a tyre rubber component according to any one of the preceding claims, wherein the tyre rubber component or the composition comprises the one or more filler, such as one or more of silica, carbon black, and/or recovered carbon black, in a total amount in the range of 40 to 125 phr, further preferably 45 to 120 phr, more preferably 50 to 100 phr.

7. The tyre rubber component or the method for producing a tyre rubber component according to any one of the preceding claims, wherein the cross-linked elastomeric polyester material comprises pentacyclic triterpenoid(s) in an amount of at least 2 wt-%, such as in the range of 2 to 15 wt-%, based on the total dry weight of the cross-linked elastomeric polyester material.

8. The tyre rubber component or the method for producing a tyre rubber component according to any one of the preceding claims, wherein the cross-linked elastomeric polyester material contains carbon chain moieties between adjacent ester bonds having, per moiety, one or more of carbon-carbon double bond(s), epoxy group(s), and/or hydroxyl group(s).

9. The tyre rubber component or the method according to any one of the preceding claims, wherein the cross-linked elastomeric polyester material has, prior to mixing,
a density in the range of 0.85 to 1.70 kg/dm³ as determined according to ISO 2781:2018, and/or
a hardness in the range of 35 to 45 ShA as determined according to ASTM D2240-15(2021) at 25 °C, and/or
a glass transition temperature, T_{g}, in the range of -30 °C to +30 °C, preferably -20 to +20°C, more preferably of -15 to +15 °C as determined by according to ASTM D7426-24, and/or
a solubility in acetone at most 30 wt-%, preferably at most 20 wt-%, more preferably at most 15 wt-%, based on the total weight of the cross-linked elastomeric polyester material, as determined according to ASTM D297-21 except that acetone extraction is carried out with boiling acetone for 1h.

10. The tyre rubber component or the method for producing a tyre rubber component according to any one of the preceding claims, wherein the tyre rubber component is
a non-tread area component, such as sidewall or a bead area component, such as clinch, or apex, or
a tread area component, such as tread, tread base, undertread, or wing.

11. A pneumatic tyre for a vehicle, the tyre comprising:
a metal component,
a textile component, and
a tyre rubber component according to any one of claims 1 or 3 to 10 or obtainable by a method according to any one of claims 2 to 10,
the components bonded together by means of curing.

12. A method for manufacturing a pneumatic tyre for a vehicle, the method comprising
providing a tyre rubber component according to any one of claims 1 or 3 to 10 or obtainable by a method according to any one of claims 2 to 10,
arranging the tyre rubber component onto a building drum to form a tubular preform,
expanding the tubular preform to form a preform of a pneumatic tyre, arranging a metal component and a textile component onto the preform of a tyre, thereby manufacturing a preform of a pneumatic tyre comprising the tyre rubber component, and
curing the preform of a pneumatic tyre, thereby bonding the components together by means of curing and thereby manufacturing the pneumatic tyre for a vehicle.

13. The tyre rubber component or the method for producing a tyre rubber component or the pneumatic tyre for a vehicle or the method for manufacturing a pneumatic tyre for a vehicle according to any one of the preceding claims, wherein the presence of pentacyclic triterpenoid(s) contained in the cross-linked elastomeric polyester material is determinable by means of Pyrolysis-Gas Chromatography/Mass Spectrometry analysis from the tyre rubber component or cured tyre rubber component, when pyrolysed at 340 °C.

14. Use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a tyre rubber component.

15. Use of a cross-linked elastomeric polyester material of suberin monomers and pentacyclic triterpenoid(s) to at least partially replace one or more of styrene butadiene rubber, natural rubber, isoprene rubber, epoxidized natural rubber, and/or butadiene rubber in a pneumatic tyre for a vehicle.
